# EUROPÄISCHE PATENTANMELDUNG

(11) **EP 2 264 082 A1**
(43) Veröffentlichungstag der Anmeldung: **22.12.2010**
(21) Anmeldenummer: 09008128.2
(22) Anmeldetag: 19.06.2009
(51) Int. Cl.: C08G 65/00

(54) **Terminal ungesättigte, glycidol-basierte Markomonomere, daraus erhältliche Polymere, Herstellung und Verwendung**

(71) Anmelder: BYK-Chemie GmbH, 46483 Wesel (DE)
(72) Erfinder: Jaunky, Wojciech, 46485 Wesel (DE); Frank, Albert, 46509 Xanten (DE); Bubat, Alfred, 46487 Wesel (DE); Omeis, Jürgen, 46286 Dorsten-Lembeck (DE)
(74) Vertreter: Leifert & Steffan

(57) **Zusammenfassung**

Verfahren zur Herstellung eines Makromonomers, worin eine Startverbindung H₂C = CR¹ - C₆H₄₋ₛ(R⁴)ₛ - R³ - OH oder H₂C = CR² - CO - NH - R³ - OH, worin jeweils R¹ und R² = H oder linearer oder verzweigter Alkylrest mit 1 bis 4 C-Atomen, R³ = linearer oder verzweigter Alkylen-, Aralkylen-Rest mit 1 bis 20 C-Atomen, der ein oder mehrere Hydroxygruppen enthalten kann, und R⁴ = unabhängig voneinander linearer oder verzweigter Alkyl-, Aralkyl-, Alkoxy- oder Aralkoxy-Rest mit 1 bis 20 C-Atomen und s = 0 - 4, nach partieller Deprotonierung mit mindestens einer hydroxyfunktionellen Oxiranverbindung in Gegenwart eines Inhibitors der radikalischen Polymerisation unter Öffnung des Oxiranrings umgesetzt wird, wobei das molare Verhältnis der eingesetzten Stoffmengen n_{(Startverbindung)} : n_{(Oxiranverbindung)} zwischen 1 : 100 und 1 : 1 liegt.

Nach dem Verfahren erhältliche Makromonomere, daraus erhältliche Polymere und deren Verwendung als Additive in Beschichtungsmitteln, Kunststoffen und Kosmetika.

## Beschreibung

Die Erfindung betrifft terminal ungesättigte, glycidol-basierte Makromonomere, ein Verfahren zu ihrer Herstellung, daraus erhältliche Polymere sowie die Verwendung der Polymere als Additive in Beschichtungsmitteln, Kunststoffen und Kosmetika.

### Stand der Technik

Makromonomere sind Oligomere oder Polymere mit mindestens einer funktionellen Endgruppe, über die Polymerisationsreaktionen ablaufen können. Makromonomere sind somit makromolekulare Monomere, die zu Homo- oder Copolymeren definierter Strukturen umgesetzt werden können. Beispielsweise können Makromonomere mit einer ethylenisch ungesättigten Endgruppe durch radikalische Polymerisation zu Propfcopolymeren oder Kammpolymeren mit definierter Länge der Seitenketten umgesetzt werden.

Dworak et al. (Polymer Bulletin 40, 461-468 (1998)) beschreiben die Herstellung von linearen, glycidol-basierten Makromonomeren mit einer terminalen Styrolgruppe. Die terminale Styrolgruppe wird über eine Terminierungsreaktion eingeführt. Nachteilig hieran ist die Notwendigkeit, einen Überschuss an Terminierungsreagenz (p-Chloromethylstyrol) einzusetzen, um eine vollständige Funktionalisierung der Zwischenprodukte erreichen zu können. Werden nur äquimolare Mengen an Terminierungsreagenz eingesetzt, so ist die Funktionalisierung nicht quantitativ. Aufgrund des zwangsläufig eingesetzten Überschusses an Terminierungsreagenz und von ablaufenden Nebenreaktionen muss das Endprodukt aufgereinigt werden.

JP 09-188755 A beschreibt die Herstellung linearer Polyglycerolmonoalkylether mit primären Hydroxylgruppen durch Umsetzung eines Glycidylesters mit einem aliphatischen Alkohol und die nachfolgende Verseifung des resultierenden Addukts. Die linearen Polyglycerolmonoalkylether weisen keine terminale ungesättigte Gruppe auf.

JP 09-235246 A beschreibt die Herstellung eines Polyglycerols mittels Additionspolymerisation eines bestimmten, schutzgruppenhaltigen Glycidol-Derivats und eines organischen Alkohols. Die Schutzgruppe wird anschließend abgespalten.

EP 1 785 410 A1 beschreibt die Herstellung von Polyglycerol-Monoethern verschiedenster Alkohole durch anionische ringöffnende Polymerisation von Glycidol. Das Verfahren soll Polyglycerol-Monoether liefern, die zum Einsatz in Lebensmitteln oder Kosmetika geeignet sein sollen.

US 2003/0120022 A1 beschreibt die Herstellung stark verzweigter Polyole durch anionische ringöffnende Polymerisation von Glycidol in Gegenwart eines Startermoleküls mit aktivem Wasserstoffatom. Das Startermolekül kann Allylgruppen oder 10-Undecenylgruppen enthalten.

JP 2007-154075 A beschreibt die Herstellung eines Emulgators für die Emulsionspolymerisation. Zur Synthese des Emulgators wird zunächst der Oxiranring eines Glycidyl(meth)acrylats mit einem Alkohol geöffnet. Anschließend wird die dadurch entstehende sekundäre Hydroxylgruppe des Addukts zur Polymerisation von Glycidol genutzt. Die resultierenden Emulgatoren weisen eine (meth)acrylatbasierte Kopfgruppe und einen Polyglycidolrest auf, die zwingend durch eine verzweigte, substituierte Alkylethergruppe verbunden sind.

W. F. Hoskyns (Research Disclosure 174, 32-33 (1978)) beschreibt Polymeraddukte aus Glycidol und verschiedensten hydroxyfunktionellen ungesättigten Verbindungen. Bevorzugt werden als hydroxyfunktionelle ungesättigte Verbindungen (Meth)Acrylsäureester eingesetzt, beispielsweise 2-Hydroxyethylmethacrylat. Zur Herstellung der Polymeraddukte wird Glycidol vorgelegt und bei einer Temperatur von 150°C mit einer Mischung aus Katalysator (z.B. Kaliumhydroxid), Inhibitor der radikalischen Polymerisation und 2-Hydroxyethylmethacrylat versetzt. Durch die Verwendung von Estern als ungesättigte Verbindungen, durch die hohe Reaktionstemperatur und die beschriebene Reaktionsfolge werden unerwünschte Nebenreaktionen begünstigt, wie die Bildung von Homopolyglycidolen durch Autopolymerisation des Glycidols, sowie unerwünschte Nebenreaktionen am Sauerstoff der Estergruppe ("back-biting", Transesterifizierung).

### Aufgabe

Aufgabe der vorliegenden Erfindung war es, glycidol-basierte Makromonomere und ein Verfahren zu ihrer Herstellung bereitzustellen, die pro Molekül jeweils eine radikalisch polymerisierbare Kopfgruppe enthalten, die möglichst wenig Nebenprodukte aufweisen, und aus denen durch radikalische Homo- oder Copolymerisation, gegebenenfalls mit weiteren Comonomeren, neue Homo- und/oder Copolymere erhalten werden können, die als Additive in Beschichtungsmitteln, Kunststoffen und/oder Kosmetika eingesetzt werden können. Durch das Herstellverfahren sollen diese glycidol-basierten Makromonomere in möglichst einheitlicher, gut definierter Struktur erhalten werden können. Der Anteil an Nebenreaktionen und Nebenprodukten soll möglichst gering sein. Insbesondere soll möglichst kein "back-biting" auftreten.

Eine weitere Aufgabe der vorliegenden Erfindung war es, neue Homo- und/oder Copolymere und ein Verfahren zu ihrer Herstellung bereitzustellen, die aus glycidol-basierten Makromonomeren und gegebenenfalls weiteren Comonomeren erhalten werden können und die zur Verwendung als Additive in Beschichtungsmitteln, Kunststoffen und Kosmetika geeignet sind.

Durch die Verwendung der Homo- und/oder Copolymere als Additive sollen die Eigenschaften der Beschichtungsmittel bzw. Beschichtungen, Kunststoffe und/oder Kosmetika gezielt verändert werden können.
- Beispielsweise sollen Additive erhalten werden können, die als Verlaufmittel geeignet sind und beispielsweise den Verlauf, den Glanz und/oder die Opaleszenz der Beschichtungsmittel bzw. Beschichtungen oder Kunststoffe verbessern können.
- Beispielsweise sollen Additive erhalten werden können, die den Beschichtungsmitteln bzw. Beschichtungen und/oder den Kunststoffen eine anti-adhäsive Oberfläche verleihen, so dass sich beispielsweise schmutz-, wasser- und/oder ölabweisende Oberflächen erzielen lassen.
- Beispielsweise sollen Additive erhalten werden können, die als Netz- und Dispergiermittel geeignet sind und beispielsweise die Viskosität von pigmentierten und/oder füllstoffhaltigen Beschichtungsmitteln erniedrigen und/oder die Dispersion von Pigmenten und/oder Füllstoffen in Beschichtungsmitteln, Kunststoffen oder Kosmetika stabilisieren können.
- Beispielsweise sollen Additive erhalten werden können, die den Beschichtungsmitteln bzw. Beschichtungen und/oder den Kunststoffen eine verbesserte Benetzbarkeit verleihen, so dass beispielsweise leichter bedruckbare Oberflächen erzielt werden und/oder die Haftung von Beschichtungen verbessert wird. Viele Beschichtungen, polymere Formmassen und Thermoplasten besitzen eine unpolare Oberfläche mit niedriger Oberflächenenergie. Deshalb ist die Benetzung (overcoatability) derartiger Oberflächen durch z. B. wässrige Beschichtungsmittel, Druckfarben, wässrige Kunststoffdispersionen, Klebstoffe oder Haftvermittler eine Herausforderung. Um die Benetzbarkeit derartiger Substratoberflächen durch polare (z.B. wässrige) Beschichtungsmittel zu verbessern, muss die Oberflächenenergie der Substrate durch den Einsatz von Additiven erhöht werden, so dass die Substratoberflächen polarer gemacht werden. Aus diesem Grund gibt es einen Bedarf zur Entwicklung entsprechender Additive zur Verbesserung der Benetzbarkeit und damit z.B. der Bedruckbarkeit oder Lackierbarkeit diverser Beschichtungen, polymerer Formmassen und Thermoplasten.

Weiterhin sollen die zur Vermittlung dieser verbesserten Eigenschaften zugesetzten Additive die anderen Eigenschaften der Beschichtungsmittel bzw. Beschichtungen, Kunststoffe oder Kosmetika möglichst nicht beeinträchtigen. Die zugesetzten Additive sollen außerdem in relativ geringen Mengen ihre Wirksamkeit entfalten können. Die Beschichtungen und Kunststoffe (polymere Formmassen und Thermoplaste) sollen ihre verbesserten Oberflächeneigenschaften weiterhin über einen langen Zeitraum von mehreren Jahren auch bei Außenbewitterung nahezu beibehalten. Dies sollte auch die Permanenz der Effekte, beispielsweise des anti-adhäsiven und/oder schmutzabweisenden Effektes, über mehrere Reinigungszyklen hinweg mit einschließen.

Des weiteren sollen Beschichtungsmittel bzw. Beschichtungen und Kunststoffe (d.h. polymere Formmassen und Thermoplaste) und Kosmetika bereitgestellt werden, die derart verbesserte Eigenschaften aufweisen.

### Lösung der Aufgabe

Die Aufgaben werden überraschenderweise durch den Gegenstand der unabhängigen Patentansprüche gelöst. Besondere Ausführungsformen der Erfindung werden in den abhängigen Patentansprüchen beschrieben.

Ein Gegenstand der Erfindung ist ein Verfahren zur Herstellung eines Makromonomers, nach welchem
(A) eine Startverbindung U - OH, in der
   U - O - = eine ethylenisch ungesättigte Kopfgruppe, ausgewählt aus der
   Gruppe bestehend aus
   a) Resten der allgemeinen Formel (I)

      H₂C = CR¹ - C₆H₄₋ₛ(R⁴)ₛ - R³ - O - , (I)

      und
   b) Resten der allgemeinen Formel (II)

      H₂C=CR²-CO-NH-R³-O- (II)

      mit R¹ und R² = H oder linearer oder verzweigter Alkylrest mit 1 bis 4 C-Atomen,
      mit R³ = linearer oder verzweigter Alkylen-, Aralkylen-Rest mit 1 bis 20 C-Atomen, der ein oder mehrere Hydroxygruppen enthalten kann,
      und mit R⁴ = unabhängig voneinander linearer oder verzweigter Alkyl-,
      Aralkyl-, Alkoxy- oder Aralkoxy-Rest mit 1 bis 20 C-Atomen und s = 0 - 4, ist, durch Zusatz eines Alkalihydroxids oder eines Alkoxids unter Bildung von Wasser oder Alkohol partiell deprotoniert wird, so dass ein Gemisch aus protonierten (U-OH) und deprotonierten (U-O⁽⁻⁾) Molekülen der Startverbindung entsteht, dann
(B) das entstandene Wasser oder der entstandene Alkohol im Wesentlichen aus dem Reaktionsgemisch entfernt wird, und anschließend
(C) das Gemisch aus protonierten (U-OH) und deprotonierten (U-O⁽⁻⁾) Molekülen der Startverbindung mit mindestens einer Oxiranverbindung der Formel (III) 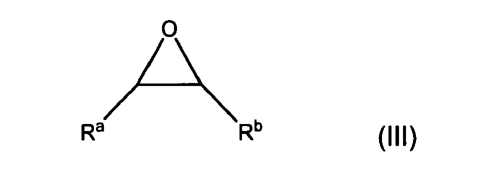
wobei R^{a} = Wasserstoff, Methyl, Ethyl, n-Propyl, iso-Propyl, n-Butyl, iso-Butyl, sec-Butyl oder tert-Butyl, und R^{b} = linearer oder verzweigter Alkylrest mit 1 bis 6 Kohlenstoffatomen und mindestens einer Hydroxygruppe, die optional mit einer Schutzgruppe verethert sein kann, ist, sowie gegebenenfalls mit mindestens einem Alkylenoxid, in Gegenwart eines Inhibitors der radikalischen Polymerisation unter Öffnung des Oxiranrings umgesetzt wird, wobei das molare Verhältnis der eingesetzten Stoffmengen n_{(Startverbindung)} : n_{(Oxiranverbindung)} zwischen 1 : 100 und 1 : 1 liegt.

Ein weiterer Gegenstand der Erfindung ist ein Makromonomer, welches nach dem oben beschriebenen Verfahren erhältlich ist.

Ein weiterer Gegenstand der Erfindung ist ein Polymer, welches durch radikalische Polymerisation eines oder mehrerer der oben beschriebenen Makromonomere und gegebenenfalls eines oder mehrerer weiterer, radikalisch polymerisierbarer Comonomere erhältlich ist.

Ein weiterer Gegenstand der Erfindung ist ein Verfahren zur Herstellung des oben beschriebenen Polymers, nach welchem mindestens ein oben beschriebenes Makromonomer und gegebenenfalls ein oder mehrere weitere, radikalisch polymerisierbare Comonomere radikalisch polymerisiert werden.

Ein weiterer Gegenstand der Erfindung ist die Verwendung des oben beschriebenen Polymers als Additiv in Beschichtungsmitteln, Kunststoffen oder Kosmetika.

Ein weiterer Gegenstand der Erfindung sind Beschichtungsmittel, Kunststoffe und Kosmetika, die mindestens ein oben beschriebenes Polymer enthalten.

### Ausführliche Beschreibung der Erfindung

### MAKROMONOMERE UND DEREN HERSTELLUNG

### Startverbindung U - OH

Die Startverbindung U - OH weist eine ethylenisch ungesättigte Kopfgruppe U - **O** -, ausgewählt aus der Gruppe bestehend aus
a) Resten der allgemeinen Formel (I)

   H₂C = CR¹ - C₆H₄₋ₛ(R⁴)ₛ - R³ - O - (I)
und b) Resten der allgemeinen Formel (II)

   H₂C=CR²-CO-NH-R³-O- (II)

   mit R¹ und R² = H oder linearer oder verzweigter Alkylrest mit 1 bis 4 C-Atomen, bevorzugt H oder CH₃, und
   mit R³ = linearer oder verzweigter Alkylen-, Aralkylen-Rest mit 1 bis 20 C-Atomen, der ein oder mehrere Hydroxygruppen enthalten kann, und
   mit R⁴ = unabhängig voneinander linearer oder verzweigter Alkyl-, Aralkyl-, Alkoxy-oder Aralkoxy-Rest mit 1 bis 20 C-Atomen und s = 0 - 4, auf.

In den Resten der allgemeinen Formel (I) können die Substituenten (H₂C = CR¹ -) und (- R³ - O -) am Phenylring (- C₆H₄₋ₛ(R⁴)ₛ-) zueinander in ortho-, meta- oder para-Position stehen. Der Phenylring (- C₆H₄₋ₛ(R⁴)ₛ-) trägt darüber hinaus entweder keinen (s = 0) oder einen bis vier (s = 1 - 4) weitere Substituenten R⁴.

Geeignete Startverbindungen U - OH sind somit
a) substituierte oder unsubstituierte α-Vinylphenylalkyl-ω-hydroxy-Verbindungen der Formel H₂C = CR¹ - C₆H₄₋ₛ(R⁴)ₛ - R³ - OH, beispielsweise Vinylbenzylalkohol (H₂C = CH - C₆H₄ - CH₂ - OH) sowie
b) substituierte oder unsubstituierte N-(Hydroxyalkyl)acrylamide der Formel H₂C = CR² - CO - NH - R³ - OH, beispielsweise N-(2-Hydroxypropyl)methacrylamid (H₂C = C(CH₃) - CO - NH - CH₂ - CH(CH₃) - OH), N-[1-(Hydroxymethyl)propyl]methacrylamid (H₂C = C(CH₃) - CO - NH - CH(CH₂ -CH₃) - CH₂ - OH) oder N-(2,3-Dihydroxypropyl)methacrylamid (H₂C = C(CH₃) - CO - NH - CH₂ - CH(OH) - CH₂ - OH). Die Substituenten R¹, R², R³ und R⁴ sind wie oben beschrieben definiert.

Bevorzugt ist die ethylenisch ungesättigte Kopfgruppe U - O - ein Rest der allgemeinen Formel (II)

H₂C=CR²-CO-NH-R³-O- (II)

mit R² = H oder CH₃ und
mit R³ = Ethyl oder Propyl.
In diesem Fall ist die Startverbindung U - OH eine Verbindung, ausgewählt aus der Gruppe bestehend aus Hydroxyethyl(meth)acrylamid und Hydroxypropyl-(meth)acrylamid. Die Schreibweise "(Meth)Acryl" umfasst sowohl "Acryl-" als auch "Methacryl-".

Besonders bevorzugt ist die ethylenisch ungesättigte Kopfgruppe ein Rest der allgemeinen Formel (II)

H₂C=CR²-CO-NH-R³-O- (II)

mit R² = CH₃ und
mit R³ = Ethyl.
In diesem Fall ist die Startverbindung U - OH die Verbindung N-(2-Hydroxyethyl)-methacrylamid.

Es ist erfindungswesentlich, dass die Startverbindung U - OH neben der Hydroxylgruppe - OH keine weiteren leicht hydrolysierbaren Gruppen, insbesondere keinen Ester-Sauerstoff enthält. Dies hat den Vorteil, dass unerwünschte Nebenreaktionen ("back-biting"), die ansonsten während der anionischen ringöffnenden Polymerisation an diesen Gruppen auftreten können, weitestgehend vermieden werden können. Insbesondere ist es wesentlich, dass die Startverbindung U - OH kein (Meth)Acrylsäure-Ester wie beispielsweise N-(2-Hydroxyethyl)-methacrylat (HEMA) ist. Hierdurch wird ein "back-biting", d.h. unerwünschte Reaktionen am Ester-Sauerstoff (zusätzlich zur erwünschten Polymerisationsreaktion an der Hydroxylgruppe), die zu schwerlöslichen, unbrauchbaren Nebenprodukten (wie z.B. Homopolyglycidol und Produkte, die mehr als eine ethylenisch ungesättigte Gruppe enthalten) führen kann, vermieden.
Die Anwesenheit solcher Nebenprodukte ist insbesondere auch deshalb unerwünscht, da sie in einer nachfolgenden Copolymerisation der erhaltenen Makromonomere zu folgenden Problemen führen können: Eventuell vorhandenes Homopolyglycidol wird in der Copolymerisation mit umgesetzt, so dass Homopolyglycidol-haltige Copolymerisationsprodukte erhalten werden, die als Zusatzstoffe unerwünschte Eigenschaften wie Inkompatibilitäten aufweisen und zu Oberflächendefekten führen können. Dagegen können eventuell vorhandene Nebenprodukte, die mehr als eine ungesättigte Gruppe enthalten, zur unerwünschten Vernetzung der Copolymere führen.

### Hydroxyfunktionelle Oxiranverbindung

Die Oxiranverbindung entspricht der Formel (III) 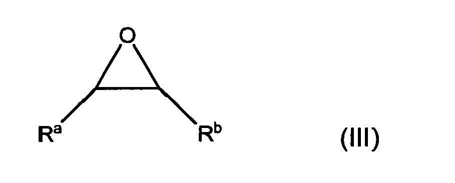 wobei R^{a} = Wasserstoff, Methyl, Ethyl, n-Propyl, iso-Propyl, n-Butyl, iso-Butyl, sec-Butyl oder tert-Butyl,
und R^{b} = linearer oder verzweigter Alkylrest mit 1 bis 6 Kohlenstoffatomen und mindestens einer Hydroxygruppe, die optional mit einer Schutzgruppe verethert sein kann, ist.
Bevorzugt ist R^{a} = Wasserstoff.
Bevorzugt weist der Alkylrest R^{b} genau eine Hydroxygruppe auf. Bevorzugt weist der Alkylrest R^{b} eine endständige Hydroxygruppe auf. Besonders bevorzugt weist der Alkylrest R^{b} genau eine endständige Hydroxygruppe auf.

Der Alkylrest R^{b} kann linear oder verzweigt sein. Vorzugsweise ist R^{b} ein Alkylrest mit 1 bis 3 Kohlenstoffatomen, bevorzugt mit 1 bis 2 Kohlenstoffatomen.

Ganz besonders bevorzugt ist der Alkylrest R^{b} Hydroxymethyl.

Beispielsweise kann als Oxiranverbindung Glycidol (1,2-Epoxy-3-hydroxypropan) verwendet werden.

Die Hydroxygruppe(n) des Alkylrests R^{b} können frei vorliegen oder mit einer Schutzgruppe verethert sein.

Sollen Makromonomere mit einem verzweigten oxiran-basierten Rest erhalten werden, so wird mindestens eine Oxiranverbindung eingesetzt, die mindestens eine freie Hydroxygruppe aufweist. Durch die Öffnung des Oxiranrings unter basischer Katalyse entsteht zunächst eine sekundäre Hydroxygruppe, deren Proton in schnellem Austausch mit der freien Hydroxygruppe der Oxiranverbindung steht. Durch den schnellen Protonenaustausch, der auch die weiteren Hydroxygruppen des entstehenden Moleküls umfasst, ist gewährleistet, dass sämtliche Hydroxygruppen in der Polymerisationsreaktion aktiv sind und als Kettenverlängerungspunkte zur Verfügung stehen, so dass verzweigte Produkte erhalten werden. Bei einem höheren Anteil an Oxiranverbindungen mit freien Hydroxygruppen, bezogen auf alle eingesetzten Oxiranverbindungen, werden in der Regel stärker verzweigte Produkte erhalten.

Sollen dagegen Makromonomere mit einem linearen oxiran-basierten Rest erhalten werden, so werden die Hydroxygruppen der Oxiranverbindungen vor der anionischen ringöffnenden Polymerisation zunächst mit einer geeigneten Schutzgruppe versehen. Geeignete Schutzgruppen sind solche, die unter den basischen Bedingungen der anionischen ringöffnenden Polymerisation stabil sind und die nach erfolgter Polymerisation leicht wieder entfernt werden können, beispielsweise durch Hydrolyse, so dass die ursprünglichen Hydroxylgruppen zurückerhalten werden. Beispiele für bevorzugte Schutzgruppen sind Acetalgruppen wie z.B. Ethoxyethyl-Gruppen, O-tert-Butyl-Gruppen und O-Benzyl-Gruppen. Acetalgruppen werden aufgrund ihrer leichten Entfernbarkeit mit Brönsted-Säuren (z.B. HCl) oder LewisSäuren (z.B. AlCl₃) besonders bevorzugt. Beispielsweise kann Glycidol (2,3-Epoxy-1-propanol) zunächst mit Ethylvinylether zu Ethoxyethyl-Glycidylether (EEGE) umgesetzt werden [Fitton A, Hill J, Jane D, Millar R. Synthesis 1987, 1140]. Durch die Anwesenheit einer Schutzgruppe an der Hydroxylgruppe des Alkylrests R^{b} der Oxiranverbindung steht während der anionischen ringöffnenden Polymerisation jeweils stets nur eine aktive Hydroxylgruppe in der wachsenden Polymerkette als Kettenverlängerungspunkt zur Verfügung, so dass lineare Produkte erhalten werden. Nach erfolgter Polymerisation können die Schutzgruppen in einem folgenden Reaktionsschritt abgespalten werden, so dass die ursprünglichen Hydroxylgruppen der Oxiran-Monomere zurückerhalten werden.

### Alkylenoxide

Die anionische ringöffnende Polymerisation der Oxiran-Verbindungen der Formel (III) kann in Anwesenheit eines oder mehrerer Alkylenoxide durchgeführt werden.

Unter Alkylenoxiden werden die Alkylenoxide der Formel (IV) und der Formel (V) (Glycidylether) verstanden: 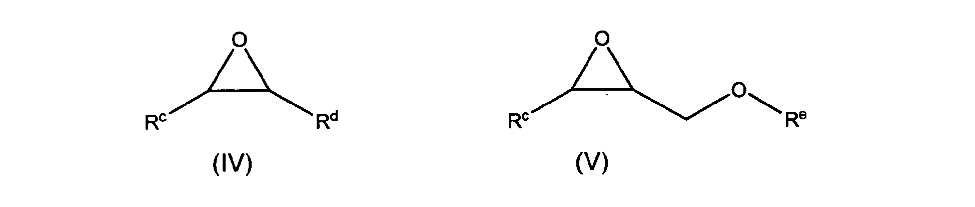 Hierin sind die Reste R^{c}, R^{d} und R^{e} unabhängig voneinander ausgewählt aus der Gruppe bestehend aus linearen und verzweigten Alkyl-, Aryl- und Aralkylresten mit 1 - 20 C-Atomen. Darüber hinaus können R^{c} und R^{d} auch Wasserstoff sein.

Beispiele geeigneter Alkylenoxide der Formel (IV) sind Ethylenoxid, Propylenoxid, Butylenoxid, Pentylenoxid (1,2-Epoxypentan) und Hexylenoxid (1,2-Epoxyhexan) sowie Styroloxid. Beispiele geeigneter Glycidylether der Formel (V) sind Methylglycidylether, Ethylglycidylether, Propylglycidylether, n-Butylglycidylether, (2-Ethylhexyl)glycidylether, Laurylglycidylether, Stearylglycidylether und Phenylglycidylether. Bevorzugt werden Ethylenoxid und/oder Propylenoxid. Im Gegensatz zu den oben genannten Oxiran-Verbindungen der Formel (III) weisen die Alkylenoxide der Formeln (IV) und (V) keine Hydroxygruppe auf. Die Synthese der Makromonomere kann unter erhöhtem Druck durchgeführt werden, wenn dies notwendig ist, z.B. beim Einsatz gasförmiger Alkylenoxide wie Ethylenoxid.

In einer bevorzugten Ausführungsform der Erfindung wird kein Alkylenoxid eingesetzt. Jedoch kann der Einsatz eines oder mehrerer Alkylenoxide folgende

Eigenschaften wie beispielsweise Schaumbildung, Viskosität und Kristallinität beeinflussen.

Wird mindestens ein Alkylenoxid eingesetzt, so liegt das Verhältnis der eingesetzten Stoffmengen, [n_{(Oxiranverbindung)} + n_{(Alkylenoxid)}] : n_{(Startverbindung)}, zwischen 100 : 1 und 2 : 1, bevorzugter zwischen 50:1 und 3:1 und besonders bevorzugt zwischen 20:1 und 3:1.

Die Oxiranverbindungen der Formeln (III), (IV) und (V) können statistisch, blockweise oder gradientenartig polymerisiert werden.

### Herstellung der Makromonomere durch anionische Polymerisation

Die Makromonomere können dadurch hergestellt werden, dass
(A) eine Startverbindung U - OH, in der
   U - O - = eine ethylenisch ungesättigte Kopfgruppe, ausgewählt aus der
   Gruppe bestehend aus
   a) Resten der allgemeinen Formel (I)

      H₂C = CR¹ - C₆H₄₋ₛ(R⁴)ₛ - R³ - O -, (I)

      und
   b) Resten der allgemeinen Formel (II)

      H₂C=CR²-CO-NH-R³-O- (II)

      mit R¹ und R² = H oder linearer oder verzweigter Alkylrest mit 1 bis 4 C-Atomen,
      mit R³ = linearer oder verzweigter Alkylen-, Aralkylen-Rest mit 1 bis 20 C-Atomen, der ein oder mehrere Hydroxygruppen enthalten kann, und
      mit R⁴ = unabhängig voneinander linearer oder verzweigter Alkyl-, Aralkyl-,
      Alkoxy- oder Aralkoxy-Rest mit 1 bis 20 C-Atomen und s = 0 - 4, ist,
      durch Zusatz eines Alkalihydroxids oder eines Alkoxids unter Bildung von Wasser oder Alkohol partiell deprotoniert wird, so dass ein Gemisch aus protonierten (U-OH) und deprotonierten (U-O⁽⁻⁾) Molekülen der Startverbindung entsteht, dann
(B) das entstandene Wasser oder der entstandene Alkohol im Wesentlichen aus dem Reaktionsgemisch entfernt wird, und anschließend
(C) das Gemisch aus protonierten (U-OH) und deprotonierten (U-O⁽⁻⁾) Molekülen der Startverbindung mit mindestens einer Oxiranverbindung der Formel (III) 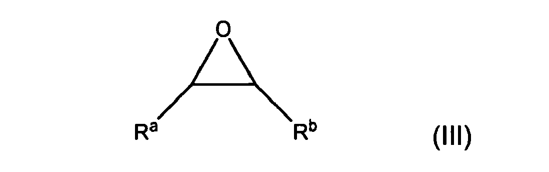
wobei R^{a} = Wasserstoff, Methyl, Ethyl, n-Propyl, iso-Propyl, n-Butyl, iso-Butyl, sec-Butyl oder tert-Butyl,
und R^{b} = linearer oder verzweigter Alkylrest mit 1 bis 6 Kohlenstoffatomen und mindestens einer Hydroxygruppe, die optional mit einer Schutzgruppe verethert sein kann, ist,
sowie gegebenenfalls mit mindestens einem Alkylenoxid,
in Gegenwart eines Inhibitors der radikalischen Polymerisation unter Öffnung des Oxiranrings umgesetzt wird, wobei das molare Verhältnis der eingesetzten Stoffmengen n_{(Startverbindung)} : n_{(Oxiranverbindung)} zwischen 1 : 100 und 1 : 1 liegt.

Als Alkalihydroxid oder Alkoxid sind basische Verbindungen geeignet, die eine teilweise oder völlige Deprotonierung der Gruppe -OH der Startverbindung bewirken können. Beispiele für geeignete Verbindungen sind Alkalimetall-Hydroxide, z.B. Kaliumhydroxid, oder -Alkoxide wie z.B. Kalium-Alkanolate, beispielsweise Kaliumtert-Butanolat. Die Verbindung(en) wird zunächst der Startverbindung zugegeben und das durch die teilweise oder völlige Deprotonierung der OH-Gruppe der Startverbindung entstehende Wasser bzw. der entstehende Alkohol durch Destillation im Wesentlichen aus dem Reaktionsgemisch entfernt. Bevorzugt werden 0,1 - 80%, besonders bevorzugt 2 - 20%, der OH-Gruppen der Startverbindung durch Zusatz des Alkalihydroxids bzw. Alkoxids deprotoniert, so dass bevorzugt ein Gemisch aus 0,1 - 80% deprotonierten (U-O⁽⁻⁾) und 20 - 99,9% protonierten (U-OH) Molekülen der Startverbindung, besonders bevorzugt ein Gemisch aus 2 - 20% deprotonierten (U-O⁽⁻⁾) und 20 - 99,9% protonierten (U-OH) Molekülen der Startverbindung, vorliegt. Unter "im Wesentlichen entfernt" wird verstanden, dass der überwiegende Teil des entstehenden Wassers bzw. Alkohols entfernt wird, so dass höchstens geringe Restmengen an Wasser bzw. Alkohol im Reaktionsgemisch verbleiben, nämlich weniger als 0,1 Gew.% bezogen auf das Reaktionsgemisch.

Um eine vorzeitige Polymerisation der radikalisch polymerisierbaren Kopfgruppe U der Startverbindung zu vermeiden, wird die anionische ringöffnende Polymerisation in Anwesenheit mindestens eines Inhibitors der radikalischen Polymerisation durchgeführt. Die Inhibitoren der radikalischen Polymerisation können freie Radikale abfangen, die sich möglicherweise während der anionischen Polymerisation bilden könnten, so dass die Stabilität der radikalisch polymerisierbaren, ethylenisch ungesättigten Kopfgruppe U in der Startverbindung und auch in den erhaltenen Makromonomeren während der Reaktion und bei der späteren Lagerung gewährleistet wird. Als Inhibitor der radikalischen Polymerisation sind beispielsweise Hydrochinon oder Hydrochinonmonomethylether geeignet.

Beispielsweise kann ein Verfahren zur Herstellung der Makromonomere wie folgt durchgeführt werden. Die Reaktion wird unter Inertgas durchgeführt, beispielsweise unter einem Stickstoffstrom oder Argonstrom. Eine Startverbindung U - OH wird durch eine geeignete Base (z.B. Alkalimetall-Hydroxid oder -Alkoxid) teilweise deprotoniert. Beispielsweise werden 0,1 bis 80% der OH-Gruppen der Startverbindung deprotoniert, bevorzugt 2 - 20%. Das entstehende Wasser bzw. der entstehende Alkohol wird durch Destillation entfernt. Es wird beispielsweise ein Gemisch aus 0,1 - 80% deprotonierten (U-O⁽⁻⁾) und 20 - 99,9% protonierten (U-OH) Molekülen der Startverbindung, bevorzugt ein Gemisch aus 2 - 20% deprotonierten (U-O⁽⁻⁾) und 20 - 99,9% protonierten (U-OH) Molekülen der Startverbindung, erhalten. Dieses wird auf 40°C bis 120°C, bevorzugt 50°C bis 100°C, besonders bevorzugt auf 60°C bis 90°C erwärmt, bevor bei dieser Temperatur das oder die - gegebenenfalls mit Schutzgruppen versehenen - Oxiran-Verbindungen, sowie gegebenenfalls Alkylenoxid-Comonomere, hinzugegeben werden. Bevorzugt wird eine langsame Zugabe der Oxiran-Verbindung(en), da bei einer langsamen Zugabe besser definierte Strukturen erhalten werden. Die anionische ringöffnende Polymerisation wird durch den schnellen Austausch von Protonen zwischen den Hydroxygruppen kontrolliert und liefert gut definierte Produkte mit enger Molekulargewichtsverteilung.

Sofern die Polymerisation in Anwesenheit eines oder mehrerer Alkylenoxide (wie z.B. Ethylenoxid, Propylenoxid, Butylenoxid) durchgeführt wird, so kann dies nach bekannten Verfahren durchgeführt werden. Beschreibungen von geeigneten Reaktionsbedingungen für übliche, dem Fachmann bekannte Verfahren und geeignete Apparaturen für Synthesen unter erhöhtem Druck finden sich beispielsweise bei Nikolaus Schönfeldt, "Grenzflächenaktive Äthylenoxid-Addukte", Wissenschaftliche Verlagsgesellschaft mbH, Stuttgart (1984) und in den dort aufgeführten Zitaten.

Nach erfolgter Reaktion kann das Produkt durch Zugabe von Säure oder durch Behandlung mit einem sauren Ionenaustauscherharz neutralisiert und die Neutralisationsprodukte entfernt werden. Falls Oxiran-Verbindungen mit Schutzgruppen eingesetzt wurden, können diese gleichzeitig oder anschließend entfernt werden, beispielsweise durch saure Hydrolyse. Sind z.B. Acetal-Schutzgruppen vorhanden, so können diese durch Acidifizierung des Reaktionsmediums mittels Zugabe eines Säureüberschusses oder durch Behandlung mit einem sauren Ionenaustauscherharz leicht durch Hydrolyse vom Produkt abgespalten und gleichzeitig das Endprodukt durch den Säureüberschuss neutralisiert oder durch das saure Ionenaustauscherharz gebunden werden.

Die anionische ringöffnende Polymerisation kann in Gegenwart eines oder mehrerer geeigneter Lösemittel durchgeführt werden. Als Lösemittel sind solche geeignet, die die anionische ringöffnende Polymerisation nicht stören, also beispielsweise keine labilen Gruppen oder cyclische Gruppen aufweisen, die während der Polymerisation geöffnet werden könnten; und beispielsweise keine Gruppen enthalten, die unter den basischen Reaktionsbedingungen mit den Hydroxylgruppen der Oxiranverbindung(en), der Startverbindung oder des entstehenden Makromonomeren oder in sonstiger Weise reagieren könnten. Geeignete Lösemittel sind beispielsweise entsprechende aliphatische, cycloaliphatische und aromatische Lösemittel sowie blockierte Polyalkylenoxide und Gemische daraus. Geeignete Lösemittel sind insbesondere z.B. Toluol, Xylol, Glyme (1,2-Dimethoxyethan), Diglyme ((2-Methoxyethyl)ether), Butyldiglyme (Diethylenglykoldibutylether) und Polyglyme wie z.B. Polyethylenglykoldimethylether mit einem Molekulargewicht von über 200 g/mol.

Die Hydroxylgruppen des erhaltenen Makromonomers können frei, d.h. ungeschützt vorliegen, ganz oder teilweise mit Schutzgruppen versehen sein und/oder funktionalisiert werden. Hierdurch können die Eigenschaften der Makromonomere und/oder der daraus erhältlichen Polymere beeinflusst werden, beispielsweise die Kompatibilität mit Beschichtungssystemen oder verschiedenen Kunststoffen oder kosmetischen Mitteln. Es kann beispielsweise eine mögliche Schaumbildung, die Adsorption an Oberflächen und die Orientierung der Produkte an Grenzflächen beeinflusst werden.

Die Hydroxylgruppen des erhaltenen Makromonomers können beispielsweise mit Lactonen, wie epsilon-Caprolacton oder delta-Valerolacton, unter Öffnung des Lactonrings und gegebenenfalls unter Polymerisation des Lactons, modifiziert werden.

Weitere Seitenketten können beispielsweise durch die Umsetzung der Hydroxylgruppen mit Isocyanaten zu Urethangruppen erhalten werden. So können zum Beispiel durch die Umsetzung der Hydroxylgruppen mit Monoaddukten von Polyalkylenoxiden und TDI (Toluylendiisocyanat) entsprechende Polyalkylenoxid-Seitenketten aufgepfropft werden, z.B. Polyethylen- (EO)-, Polypropylen- (PO)- und/oder gemischte EO-/PO-Ketten (mit statistischer, blockartiger oder gradientenartiger Verteilung der EO-/PO-Monomere).

Weitere Methoden zur Modifizierung der Hydroxygruppen der Makromonomere sind z.B. die Reaktion mit Epoxiden, die Williamson'sche Ethersynthese, die Methylierung mit Diazomethan, die Acetylierung mit Acetanhydrid, oder die Reaktion mit cyclischen Säureanhydriden sowie die Carboxymethylierung. Prinzipiell ist jede Modifizierung geeignet, die keinen negativen Einfluss auf die anschließende radikalische Polymerisation oder die ethylenisch ungesättigte Kopfgruppe U hat.

### POLYMERE, DEREN HERSTELLUNG UND VERWENDUNG

Die Polymere sind erhältlich durch radikalische Polymerisation eines oder mehrerer der oben beschriebenen Makromonomere und gegebenenfalls eines oder mehrerer weiterer, radikalisch polymerisierbarer Comonomere.̅

Zur Herstellung der Polymere können ein oder mehrere verschiedene der Makromonomere radikalisch homo- oder copolymerisiert werden. Unter den Makromonomeren werden zur Herstellung der Polymere diejenigen Makromonomere bevorzugt eingesetzt, die nach den oben beschriebenen bevorzugten Ausführungsformen erhalten werden.

Die Polymere können Homopolymere oder Copolymere sein. Bevorzugt sind die Polymere Copolymere.

### Comonomere

Zusätzlich zu dem oder den oben beschriebenen Makromonomeren können zur radikalischen Polymerisation ein oder mehrere, davon verschiedene Comonomere eingesetzt werden, die radikalisch polymerisierbar sind. Vorzugsweise wird mindestens ein solches Comonomer eingesetzt. Unter radikalisch polymerisierbaren Comonomeren werden solche Verbindungen verstanden, die mindestens eine radikalisch polymerisierbare Gruppe tragen. Unter radikalisch polymerisierbaren Gruppen werden funktionelle Gruppen verstanden, die unter hierfür üblichen Bedingungen radikalisch polymerisiert werden können, beispielsweise ethylenisch ungesättigte Gruppen. Vorzugsweise wird diese ethylenisch ungesättigte Gruppe ausgewählt aus der Gruppe bestehend aus substituierten oder unsubstituierten Acryl-, Methacryl-, Acrylamido-, Methacrylamido-, Acrylamidoalkyl-, Methacrylamidoalkyl-, Styryl-, alpha-Methyl-Styryl-, Allyl-, Vinylbenzyl-, Vinylether-, Vinylester- und Vinylketongruppen; insbesondere, wenn die verwendeten Makromonomere als Kopfgruppen U Acryl-, Methacryl- oder Styrolgruppen tragen.

Beispiele geeigneter Comonomere sind Alkylacrylate und Alkylmethacrylate von geradkettigen, verzweigten oder cycloaliphatischen Alkoholen mit 1 bis 24 C-Atomen, Aralkylacrylate und Aralkylmethacrylate von Aralkylalkoholen mit 8 bis 18 C-Atomen, Hydroxyalkyl(meth)acrylate von geradkettigen, verzweigten oder cycloaliphatischen Diolen mit 2 bis 36 C-Atomen, Alkyl(meth)acrylamide von geradkettigen, verzweigten oder cycloaliphatischen Aminen mit 1 bis 22 C-Atomen, Aminoalkyl(meth)acrylate von geradkettigen, verzweigten oder cycloaliphatischen Aminoalkoholen mit 2 bis 8 C-Atomen, alkoxylierte (Meth)acrylate (wie beispielsweise Polyethylenglykol-(Meth)acrylate, Polypropylenglykol-(Meth)acrylate, Polyethylenglykol-Polypropylenglykol-(Meth)acrylate), polyestermodifizierte (Meth)acrylate (wie beispielsweise Caprolacton-modifizierte (Meth)acrylate, erhältlich z.B. von Daicel, Japan), (Meth)acrylnitrile, Vinylalkanoate, Alkene und Arylalkene mit 2 bis 30 C-Atomen, Styrole und substituierte Styrole, alpha-Methylstyrole und substituierte alpha-Methylstyrole, Alkylvinylether, Perfluoroalkyl(meth)acrylate sowie entsprechende teilweise fluorierte (Meth)acrylate, Perfluoroalkyl-Blockpolyether-(Meth)acrylate, Perfluoroalkylethylthiocarbonylaminoethyl-(Meth)acrylate, Perfluoroolefine, (Meth)acryloxyalkylsiloxane, (Meth)acryloxyalkylpolysiloxane, (Meth)acryloxypolyetheralkylpolysiloxane, N-Vinylcarbazole, fluorierte und fluor-freie Alkylester der Maleinsäure, der Fumarsäure, der Itaconsäure und der Mesaconsäure (Methylfumarsäure), (Meth)acrylamid, (Meth)acrylamide, Methacrylsäure, Acrylsäure, hydroxyfunktionelle Alkyl-(Meth)acrylamide, hydroxyfunktionelle Alkylvinylether, Natriumvinylsulfonat, Natriumstyrolsulfonat, 2-Acrylamido-2-methylpropan-sulfonsäure, N-Vinylpyrrol, N-Vinyl-2-pyrrolidon, 2-Vinyloxazolidin, 2-Vinylpyridin, 4-Vinylpyridin, 1-[2-(Methacrylolyoxy)-ethyl]-2-imidazolidinon, Aminoalkyl(meth)-acrylate, wie zum Beispiel N,N-Dimethylaminoethyl(meth)acrylat und N,N-Dimethylaminopropyl(meth)acrylat, N-Alkyl- und N,N-Dialkyl-substituierte Acrylamide mit geradkettigen, verzweigten oder cycloaliphatischen Alkylgruppen mit 1 bis 22 C-Atomen, wie zum Beispiel N-(t-Butyl)acrylamid und N,N-Dimethylacrylamid; ionische Monomere, Allylalkohol, alkoxylierte Allylalkohol-Derivate (wie beispielsweise ethoxylierter Allylalkohol, propoxylierter Allylalkohol, und mischalkoxylierter Allylalkohol mit Anteilen Ethylenoxid und Propylenoxid) sowie polyestermodifizierte (beispielsweise mit Caprolacton) Derivate auf Basis Allylalkohol.

Bevorzugt werden Comonomere wie Polydimethylsiloxanmono(meth)acrylate, beispielsweise lineare (Meth)acryloxyalkylpolydimethylsiloxane (z.B. α-Butyldimethyl-siloxy-ω-(3-methacryloxypropyl)-polydimethylsiloxan oder α-Butyldimethylsiloxy-ω-(3-acryloxy-2-hydroxypropoxypropyl)-polydimethylsiloxan), verzweigte (Meth)acryloxy-alkylpolydimethylsiloxane (z.B. Methacryloxypropyl-terminierte, verzweigte Polydimethylsiloxane wie (Methacryloxypropyl)methylsiloxan-polydimethylsiloxan-Copolymere oder Methacryloxypropyl-polydimethylsiloxane mit T-förmiger Struktur), (Meth)acrylpolyetheralkylpolydimethylsiloxane (z.B. α-Butyldimethylsiloxy-ω-(3-methacryloxypolyethylenoxidpropyl)-polydimethylsiloxan) oder Polydimethylsiloxanmonoalkene, besonders bevorzugt Polydimethylsiloxanmono(meth)acrylate, eingesetzt. Hierdurch werden Copolymere erhalten, die als Additive gut zur Verringerung der Oberflächenspannung in Beschichtungsmitteln und Kunststoffen bzw. zur Erzielung kratzfester Oberflächen mit langanhaltendem Anti-Fingerprint-Effekt und schmutzabweisenden Eigenschaften eingesetzt werden können.

Bevorzugt werden fluorierte Comonomere eingesetzt. Hierdurch werden Copolymere erhalten, die als Additive ganz besonders gut als Verlaufmittel, zur Verringerung der Oberflächenspannung in Beschichtungsmitteln und Kunststoffen eingesetzt werden können bzw. zur Erzielung schmutzabweisender Oberflächen eingesetzt werden können.

Bevorzugt werden Ester der (Meth)Acrylsäure mit Alkanolen, beispielsweise mit C1-bis C14-Monohydroxyalkanen, als Comonomere eingesetzt. Hierdurch werden Copolymere erhalten, die als Additive ganz besonders gut zur Verbesserung des Verlaufs, des Glanzes und/oder der Opaleszenz der Beschichtungsmittel bzw. Beschichtungen oder Kunststoffe eingesetzt werden können. Es können beispielsweise n-Butylacrylat, i-Butylacrylat, t-Butylacrylat, Methylacrylat, Ethylacrylat, Propylacrylat, Hexylacrylat, 2-Ethylhexylacrylat, Cyclohexylacrylat, Laurylacrylat, Tetradecylacrylat, Isobornylacrylat, n-Butylmethacrylat, i-Butylmethacrylat, t-Butylmethacrylat, Methylmethacrylat, Ethylmethacrylat, Propylmethacrylat, Hexylmethacrylat, 2-Ethylhexylmethacrylat, Cyclohexylmethacrylat, Laurylmethacrylat, Tetradecylmethacrylat und/oder Isobornylmethacrylat eingesetzt werden. Weiterhin bevorzugte Monomere sind Hydroxyethylacrylat, Hydroxybutylacrylat, Hydroxyethylmethacrylat, Hydroxybutylmethacrylat, 2-Methoxyethylacrylat, 2-Methoxyethylmethacrylat, Styrol, Ethylvinylether, Butylvinylether, Hydroxybutylvinylether, Methacrylsäure und Acrylsäure.

Für die Herstellung von Netz- und Dispergiermitteln, Haftvermittlern und Emulgatoren sind weiterhin folgende Comonomere bevorzugt: Maleinsäureanhydrid, Polyethylenglykolmonomethacrylat, Polypropylenglykolmonomethacrylat, N,N'-Dimethylaminoethylmethacrylat, N,N'-Dimethylaminoethylacrylat, 2-Vinylpyridin, 4-Vinylpyridin, Vinylimidazol.

Bevorzugt können auch Mischungen der oben genannten bevorzugten Comonomere sowie Mischungen dieser Comonomere mit anderen Comonomeren eingesetzt werden.

Die Schreibweise (Meth)acrylat umfasst sowohl Acrylate als auch Methacrylate.

Ionische Gruppen können als entsprechendes ionisches, ethylenisch ungesättigtes Monomer in das Polymer eingeführt werden oder nachträglich durch polymeranaloge Reaktionen, wie zum Beispiel Salzbildung oder Quaternisierung von tertiären Aminoverbindungen, erzeugt werden.

So ist es zum Beispiel möglich, Säurefunktionen im Polymer, wie zum Beispiel Carbonsäuren und Phosphorsäureester, mit Basen umzusetzen. Weiterhin ist es möglich, ausgehend von Säureanhydriden, wie zum Beispiel Maleinsäureanhydrid, zuerst durch Hydrolyse mit Wasser oder Bildung eines Mono- oder Partialesters mit einwertigen Alkoholen oder Polyethern die Carbonsäurefunktion zu generieren und diese anschließend mit Basen umzusetzen.

Oxiranstrukturen im Polymer lassen sich mit Nucleophilen wie o-Phosphorsäure und anschließender Versalzung mit Basen zu ionischen Gruppen umsetzen.

Hydroxyfunktionalitäten im Polymer lassen sich mit Polyphosphorsäure zu Phosphorsäureester und anschließender Versalzung mit Basen zu ionischen Gruppen umsetzen.

Geeignete Basen sind beispielsweise Amine wie zum Beispiel Dimethylaminoethanol, Diethanolamin, Triethanolamin, 2-(Dimethylamino)propan-1-ol, Triethylamin, Butylamin und Dibutylamin, Hydroxide, Oxide, Carbonate und Hydrogencarbonate von Metallen der 1. bis 3. Hauptgruppe des Periodensystems der Elemente, wie zum Beispiel Natriumhydroxid, Kaliumhydroxid, Aluminiumhydroxid und Natriumhydrogencarbonat.

Wie beispielsweise in US 6111054 beschrieben, ist es auch möglich, die Versalzung von am Polymer gebundenen Aminen mit Carbonsäuren oder Phosphorsäuren und deren Estern vorzunehmen.

Weiterhin lassen sich Amine in Alkylierungsreaktionen mit Alkylhalogeniden, wie zum Beispiel mit Benzylchlorid, oder mit einer Kombination von Oxiran mit Carbonsäure in quartäre Ammoniumsalze überführen.

Tertiäre Amine können mit Sauerstoff, Peroxoverbindungen wie Percarbonsäuren und mit Wasserstoffperoxid in Aminoxide überführt werden, die zusätzlich mit Säuren wie zum Beispiel Salzsäure versalzt werden können.

Beispiele für ionische, ethylenisch ungesättigte Monomere können der nachfolgenden Liste entnommen werden, wobei die Schreibweise (Meth)acrylat sowohl Acrylate als auch Methacrylate einschließt: Salze der Acrylsäure, Methacrylsäure oder Maleinsäure; quartäre Aminoalkyl(meth)acrylate, wie zum Beispiel 2-Trimethylammoniumethylmethacrylatchlorid und 2-Benzyldimethyl-ammoniumethyl-(meth)acrylatchlorid; Salze phosphorsäurehaltiger Monomere, wie zum Beispiel Natriumtripropylenglycolmethacrylatphosphat.

Durch beispielsweise die Verwendung von Epoxy-funktionellen Comonomeren, z. B. Glycidylacrylat und Glycidylmethacrylat, oder durch Silan-funktionelle Comonomere können kontrolliert selbstvernetzende Polymere dargestellt werden.

Die Polymere können Homo- oder Copolymere sein. Vorzugsweise sind die Polymere Copolymere.

Werden zur radikalischen Polymerisierung des oder der glycidol-basierten Makromonomere auch ein oder mehrere Comonomere eingesetzt, so beträgt der Anteil der Einheiten des oder der glycidol-basierten Makromonomere im entstehenden Copolymer vorzugsweise 1 bis 60 Mol-%, bevorzugt von 2 bis 30 Mol-%, ganz besonders bevorzugt von 2 bis 15 Mol-% Makromonomer-Einheiten, jeweils bezogen auf das gesamte Copolymer.

### Herstellung der Polymere (radikalische Polymerisation)

Die Herstellung der Polymere durch radikalische Polymerisation kann in dem Fachmann bekannter Weise in organischen Lösemitteln oder in Masse in Anwesenheit von Radikalstartern, wie z.B. Peroxiden oder Azoverbindungen, erfolgen. Als Lösemittel kommen insbesondere Ester wie z. B. Ethylacetat, n-Butylacetat oder 1-Methoxy-2-propylacetat sowie aromatische Lösemittel, wie z. B. Toluol oder Xylol und Ketone, wie z. B. Methylisobutylketon oder Methylethylketon, sowie Mischungen davon in Frage. Die Wahl des Lösemittels richtet sich auch nach dem späteren Einsatzzweck des Polymeren. Bevorzugt werden niedrigsiedende Lösemittel eingesetzt, um das Abdestillieren dieser Lösemittel zu erleichtern bei Anwendungen, in denen die Polymere als 100%-iges Produkt eingesetzt werden sollen, wie z. B. in UV-härtenden Lacksystemen oder in Polymeren.

Die radikalische Polymerisation wird bei Temperaturen von ca. 40°C bis 180°C, bevorzugt bei 60°C bis 150°C, besonders bevorzugt bei 80°C bis 130°C durchgeführt.

Die radikalische Polymerisation kann als kontinuierliches oder diskontinuierliches Verfahren durchgeführt werden.

Die radikalische Polymerisation kann beispielsweise als Massepolymerisation, als Lösungspolymerisation, als Fällungspolymerisation, als Emulsionspolymerisation oder als Suspensionspolymerisation durchgeführt werden.

Die radikalische Polymerisation kann als freie radikalische Polymerisation oder auch als kontrollierte radikalische Polymerisation durchgeführt werden.

Durch Methoden der kontrollierten radikalischen Polymerisation lassen sich besser definierte Polymerarchitekturen mit einer engeren Molekulargewichtsverteilung erzielen. Es können die dem Fachmann bekannten Methoden der kontrollierten radikalischen Polymerisation verwendet werden, wie beispielsweise ATPR (Atom Transfer Radical Polymerization), GTP (Group Transfer Polymerization), NMP (Nitroxide Mediated Polymerization), RAFT (Reversible Addition Fragmentation Chain Transfer Process) oder MADIX (Macromolecular Design via the Interchange of Xanthates).

Zu den kontrollierten Polymerisationsverfahren gehört insbesondere der "Reversible Addition Fragmentation Chain Transfer Process" (RAFT), der bei Verwendung bestimmter Polymerisationsregler auch "MADIX" (Macromolecular Design via the Interchange of Xanthates) und "Addition Fragmentation Chain Transfer" genannt wird. RAFT ist beispielsweise in Polym. Int. 2000, 49, 993, Aust. J. Chem 2005, 58, 379, J. Polym. Sci. Part A: Polym. Chem. 2005, 43, 5347, Chem. Lett. 1993, 22, 1089, J. Polym. Sci., Part A 1989, 27, 1741 sowie 1991, 29, 1053 sowie 1993, 31, 1551 sowie 1994, 32, 2745 sowie 1996, 34, 95 sowie 2003, 41, 645 sowie 2004, 42, 597 sowie 2004, 42, 6021 und auch in Macromol. Rapid Commun. 2003, 24, 197 und in US 6 291 620, WO 98/01478, WO 98/58974 und WO 99/31144 beschrieben.

Ein weiteres Verfahren zur kontrollierten Polymerisation bedient sich Nitroxylverbindungen als Polymerisationsreglern (NMP) und wird beispielsweise in Chem. Rev. 2001, 101, 3661 offenbart.

Ein weiteres kontrolliertes Polymerisationsverfahren ist auch die "Group Transfer Polymerization" (GTP), wie sie beispielsweise von O. W. Webster in "Group Transfer Polymerization", in "Encyclopedia of Polymer Science and Engineering", Band 7, H. F. Mark, N. M. Bikales, C. G. Overberger and G. Menges, Eds., Wiley Interscience, New York 1987, Seite 580 ff., sowie in O.W. Webster, Adv. Polym. Sci. 2004, 167, 1-34 offenbart ist.

Die kontrollierte radikalische Polymerisation mit Tetraphenylethan, wie sie beispielsweise in Macromol. Symp. 1996, 111, 63 beschrieben ist, ist ein weiteres Beispiel für kontrollierte Polymerisationen.

Die kontrollierte radikalische Polymerisation mit 1,1-Diphenylethen als Polymerisationsregler ist beispielsweise in Macromolecular Rapid Communications, 2001, 22, 700 beschrieben.

Die kontrollierte radikalische Polymerisation mit Inifertern ist beispielsweise in Makromol. Chem. Rapid. Commun. 1982, 3, 127 offenbart.

Die kontrollierte radikalische Polymerisation mit Organokobaltkomplexen, ist beispielsweise aus J. Am. Chem. Soc. 1994, 116, 7973, aus Journal of Polymer Science: Part A: Polymer Chemistry, Vol. 38, 1753-1766 (2000), aus Chem. Rev. 2001, 101, 36113659 sowie aus Macromolecules 2006, 39, 8219-8222 bekannt.

Als weitere kontrollierte Polymerisationstechnik ist der Degenerative Chain Transfer mit lod-Verbindungen wie zum Beispiel in Macromolecules **2008**, 41, 6261 oder in US 7 034 085 beschrieben, anzusehen.

Die kontrollierte radikalische Polymerisation in Gegenwart von Thioketonen wird beispielsweise in Chem. Commun., 2006, 835-837 und in Macromol. Rapid Commun. 2007, 28, 746-753 beschrieben.

Das Polymer kann ein Homopolymer oder ein Copolymer sein. Die Copolymere können statistische Copolymere, Block-Copolymere oder Gradientenpolymere sein und aus zwei oder mehreren, hydrophilen und/oder hydrophoben Monomeren aufgebaut sein.

Das zahlenmittlere Molekulargewicht der Polymere liegt im Bereich von 1500 bis 200000, bevorzugt 5000 bis 75000, besonders bevorzugt im Bereich von 7500 bis 50000. Das zahlenmittlere Molekulargewicht der Polymere wird mittels Gelpermeationschromatographie bestimmt.

Um das zahlenmittlere Molekulargewicht und die Molekulargewichtsverteilung der Polymere zu beeinflussen, können geeignete Kontroll- bzw. Kettentransfer-Reagenzien eingesetzt werden. Beispielsweise sind hierzu auch Thiole, wie n-Octylmercaptan, n-Dodecylmercaptan oder t-Dodecylmercaptan, und Dimere des alpha-Methylstyrols geeignet. Beispielsweise können bei der Polymerisation geringe Mengen von difunktionellen Monomeren (z.B. Hexandioldiacrylat) mit eingesetzt werden, um das Molgewicht gezielt zu erhöhen.

Die Polymere können durch polymeranaloge Reaktionen noch nachträglich modifiziert werden. Beispielsweise kann durch die nachträgliche Reaktion mit Maleinsäureanhydrid eine reaktive Doppelbindung und Säurefunktion mit eingebaut werden. Diese Säurefunktion kann zur besseren Wasserlöslichkeit auch z.B. mit Triethanolamin versalzen werden. Weiterhin können durch die nachträgliche Umesterung mit hydroxyfunktionellen (Meth)acrylaten Produkte erhalten werden, die sich auch bei strahlenhärtenden Prozessen wie UV- und Elektronenstrahlhärtung fest in Lacksysteme einbauen lassen. Auch können freie OH-Gruppen durch z. B. nachträgliche Umsetzung mit Essigsäureanhydrid verestert werden, um bei Anwendung der Polymere als Verlaufshilfsmittel in Lacken potentielle Zwischenschichthaftungsprobleme vermeiden zu können.

### Verwendung der Polymere

Weiterer Gegenstand der Erfindung ist die Verwendung der Polymere als Additive in Beschichtungsmitteln, Kunststoffen oder Kosmetika.

Unter Kunststoffen werden polymere Formmassen und Thermoplasten verstanden.

Unter Kosmetika werden kosmetische Mittel verstanden. Kosmetische Mittel sind Stoffe oder Zubereitungen aus Stoffen, die dazu bestimmt sind, äußerlich am Menschen oder in seiner Mundhöhle zur Reinigung, Pflege oder zur Beeinflussung des Aussehens oder des Körpergeruchs zur Vermittlung von Geruchseindrücken angewendet zu werden. Eine Unterscheidung zwischen Körperpflegemitteln und dekorativen Kosmetika unterbleibt, da die Reinigung und Pflege der Haut auch eine ästhetische Funktion erfüllt und dekorative Kosmetika in der Regel gleichzeitig eine schützende und pflegende Wirkung aufweisen. Somit umfassen kosmetische Mittel zählen sowohl Körperpflegemittel als auch dekorative Kosmetika. Zu den kosmetischen Mitteln zählen außerdem Stoffe und Zubereitungen zur Reinigung und Pflege von Zahnersatz. Keine kosmetischen Mittel sind dagegen diejenigen Stoffe und Zubereitungen, die überwiegend dazu bestimmt sind, Krankheiten, Leiden, Körperschäden oder krankhafte Beschwerden zu lindern oder zu beseitigen oder die zur Beeinflussung der Körperformen bestimmt sind.

Die Polymere können zum Beispiel als Verlaufmittel in Beschichtungsmitteln eingesetzt werden, um beispielsweise die optischen Eigenschaften der resultierenden Beschichtung zu verbessern. Durch die Verwendung der Polymere als Verlaufmittel kann beispielsweise der Verlauf, der Glanz und/oder die Opaleszenz der Beschichtungsmittel bzw. Beschichtungen oder Kunststoffe verbessert werden.

Die Polymere können zum Beispiel auch eingesetzt werden, um die Oberflächeneigenschaften von Beschichtungen, polymeren Formmassen und Thermoplasten zu verändern. Durch den Zusatz der Polymere kann die Oberflächenenergie von Beschichtungen, polymeren Formmassen und Thermoplasten beeinflusst werden. Die Oberfläche kann hydrophiler oder auch hydrophober gestaltet werden, so dass die Haftung auf dieser Oberfläche verbessert wird oder aber auch vermindert wird, wodurch schmutzabweisende, leicht zu reinigende Oberflächen erhalten werden können. Im allgemeinen werden durch eine Erhöhung der Oberflächenenergie hydrophilere Oberflächen erzielt, die leichter benetzt werden können und bessere Haftungsbedingungen bieten. Dagegen werden im allgemeinen durch eine Verminderung der Oberflächenenergie hydrophobere Oberflächen erzielt, die schwieriger benetzt werden können und schmutzabweisende, anti-adhäsive Eigenschaften aufweisen.

Polymere, die zur Erhöhung der Oberflächenenergie geeignet sind, können beispielsweise durch Polymerisation von vergleichsweise hydrophilen Makromonomeren (z.B. auf Basis von ethoxylierten Makromonomeren) oder durch Copolymerisation mit eher hydrophilen Comonomeren (z.B. hydrophilen Acrylaten wie Polyethylenglykol-(Meth)acrylaten oder (Meth)acrylsäure) erhalten werden. Polymere, die zur Verminderung der Oberflächenenergie geeignet sind, können beispielsweise durch Polymerisation von vergleichsweise hydrophoben Makromonomeren (z.B. auf Basis von propoxylierten Makromonomeren) oder durch Copolymerisation mit eher hydrophoben oder besonders geeigneten Comonomeren, wie z.B. Perfluorogruppen und/oder Polysiloxangruppen enthaltenden Comonomeren, erhalten werden.

### Additive zur Erzielung schmutzabweisender, anti-adhäsiver Oberflächen

Die Copolymere, die Beschichtungsmitteln, polymeren Formmassen und Thermoplasten zugesetzt werden können und durch deren Zusatz schmutzabweisende, leicht zu reinigende, anti-adhäsive Oberflächen erzielt werden können, sind beispielsweise herstellbar über die Polymerisation mindestens eines Makromonomers oder die Copolymerisation mindestens eines Makromonomers und mindestens eines Comonomers, beispielsweise eines Perfluorogruppen und/oder Polysiloxangruppen enthaltenden Comonomers.

Beschichtungsmittel, polymere Formmassen und Thermoplasten, denen entsprechende Copolymere zugesetzt werden, weisen ausgezeichnete anti-adhäsive und schmutzabweisende Eigenschaften auf. Die Copolymere beeinträchtigen auch die anderen Eigenschaften der Beschichtungsmittel bzw. Beschichtungen, polymeren Formmassen oder Thermoplasten nicht wesentlich. Dabei können diese Copolymere den Beschichtungsmitteln, polymeren Formmassen oder Thermoplasten in relativ geringen Mengen (Additivmengen) zugesetzt werden. Insbesondere in Beschichtungsmitteln und Kunststoffen, wie polymeren Formmassen und Thermoplasten, können die Polymere vorzugsweise auch in relativ geringen Mengen von 0,01 bis 5 Gew.-%, bevorzugt von 0,05 bis 2 Gew.-% und besonders bevorzugt von 0,1 bis 1 Gew.-%, jeweils bezogen auf das gesamte Beschichtungsmittel oder den gesamten Kunststoff, eingesetzt werden.

Die physikalischen Eigenschaften der ursprünglichen Beschichtungsmittel bzw. Beschichtungen, polymeren Formmassen und Thermoplasten beispielsweise in Bezug auf Korrosionsschutz, Glanzhaltung und Witterungsbeständigkeit werden durch die geringen Konzentrationen des Additivs nicht beeinträchtigt. Beschichtungsmittel bzw. Beschichtungen, polymere Formmassen und Thermoplasten, die die Copolymere enthalten, zeigen die gewünschten Eigenschaften in der Regel auch über einen Zeitraum von mehreren Jahren hinweg und behalten diese Eigenschaften auch über mehrere Reinigungszyklen hinweg bei.

Weiterhin zeigte es sich als besonders vorteilhaft, dass die Hydroxylgruppen der glycidol-basierten Makromonomer-Einheiten in den Polymeren mit reaktiven

Gruppen des Bindemittels vernetzen können und somit einen dauerhaften Effekt gewährleisten.

Durch die Verwendung der Polymere als Additive in Beschichtungsmitteln, polymeren Formmassen oder Thermoplasten können auch Oberflächen mit antistatischen Eigenschaften oder Antibeschlag-Eigenschaften erhalten werden.

### Additive zur Erzielung leicht benetzbarer Oberflächen

Beschichtungen, polymere Formmassen und Thermoplasten, denen entsprechende Copolymere zugesetzt werden, weisen ausgezeichnet benetzbare Oberflächen auf. Die Benetzbarkeit kann bestimmt werden, indem man nach den üblichen Methoden den Kontaktwinkel der Oberfläche gegen Wasser bestimmt. Für hydrophile Oberflächen soll der Kontaktwinkel < 60° betragen. Die Copolymere beeinträchtigen auch die anderen Eigenschaften der Beschichtungsmittel bzw. Beschichtungen, polymeren Formmassen oder Thermoplasten nicht wesentlich. Dabei können diese Copolymere den Beschichtungsmitteln, polymeren Formmassen oder Thermoplasten in relativ geringen Mengen (Additivmengen) zugesetzt werden, vorzugsweise in Mengen von 0,01 bis 5 Gew.-%, bevorzugt von 0,05 bis 2 Gew.-% und besonders bevorzugt von 0,1 bis 1 Gew.-%, jeweils bezogen auf das gesamte Beschichtungsmittel oder den gesamten Kunststoff. Die physikalischen Eigenschaften der ursprünglichen Beschichtungsmittel bzw. Beschichtungen, polymeren Formmassen und Thermoplasten beispielsweise in Bezug auf Korrosionsschutz, Glanzhaltung und Witterungsbeständigkeit werden durch die geringen Konzentrationen des Additivs nicht beeinträchtigt. Beschichtungsmittel bzw. Beschichtungen, polymere Formmassen und Thermoplasten, die die Copolymere enthalten, zeigen die gewünschten Eigenschaften in der Regel auch über einen Zeitraum von mehreren Jahren hinweg und behalten diese Eigenschaften auch über mehrere Reinigungszyklen hinweg bei.

Weiterhin zeigte es sich als besonders vorteilhaft, dass die Hydroxylgruppen der glycidol-basierten Makromonomer-Einheiten in den Polymeren mit reaktiven Gruppen des Bindemittels vernetzen können und somit einen dauerhaften Effekt gewährleisten.

### Netz- und Dispergiermittel

Die Polymere können auch als Dispergiermittel eingesetzt werden, und zwar in den aus dem Stand der Technik bekannten Einsatzgebieten von Dispergiermitteln, wobei anstelle der oder zusammen mit den aus dem Stand der Technik bekannten Dispergiermitteln die Polymere als Dispergiermittel eingesetzt werden. So können diese z. B. bei der Herstellung oder Verarbeitung von Lacken, Druckfarben, Papierstrich, Leder- und Textilfarben, Pasten, Pigmentkonzentraten, Keramiken oder kosmetischen Zubereitungen eingesetzt werden, insbesondere wenn diese Feststoffe wie Pigmente und/oder Füllstoffe enthalten. Auch bei der Herstellung oder Verarbeitung von Gieß- und/oder Formmassen auf Basis von synthetischen, halbsynthetischen oder natürlichen makromolekularen Stoffen, wie zum Beispiel Polyvinylchlorid, gesättigten oder ungesättigten Polyestern, Polyurethanen, Polystyrol, Polyacrylat, Polyamid, Epoxidharzen, Polyolefinen wie Polyethylen oder Polypropylen können sie eingesetzt werden. Beispielsweise lassen sich die Copolymere zur Herstellung von Gießmassen, PVC-Plastisolen, Gelcoats, Polymerbeton, Leiterplatten, Industrielacken, Holz- und Möbellacken, Fahrzeuglacken, Schiffsfarben, Korrosionsschutzfarben, Can- und Coil-Coatings, Maler- und Bautenlacken, wobei Bindemittel und/oder Lösemittel, Pigmente und gegebenenfalls Füllstoffe, die Kammcopolymere und übliche Hilfsstoffe vermischt werden, verwenden. Beispiele für übliche Bindemittel sind Harze auf Basis von Polyurethan, Cellulosenitrat, Celluloseacetobutyrat, Alkyd, Melamin, Polyester, Chlorkautschuk, Epoxid und Acrylat. Beispiele für Beschichtungen auf Wasserbasis sind kathodische oder anodische Elektrotauchlackierungen zum Beispiel für Automobilkarossen. Weitere Beispiele sind Putze, Silikatfarben, Dispersionsfarben, Wasserlacke auf Basis von wasserverdünnbaren Alkyden, Alkydemulsionen, Hybridsystemen, 2-Komponenten-Systemen, Polyurethan- und Acrylat-Dispersionen.

Die Copolymere eignen sich insbesondere auch als Dispergiermittel zur Herstellung von Feststoffkonzentraten, wie zum Beispiel Pigmentkonzentraten. Dazu werden beispielsweise die Copolymere in einem Trägermedium wie organischen Lösemitteln, Weichmachern und/oder Wasser vorgelegt, und die zu dispergierenden Feststoffe werden unter Rühren zugegeben. Zusätzlich können diese Konzentrate Bindemittel und/oder andere Hilfsstoffe enthalten. Mit den Copolymeren ist es aber insbesondere möglich, stabile bindemittelfreie Pigmentkonzentrate herzustellen. Ebenso ist es möglich, mit den Polymeren fließfähige Feststoffkonzentrate aus Pigmentpresskuchen herzustellen. Hierbei werden dem Presskuchen, der noch organische Lösemittel, Weichmacher und/oder Wasser enthalten kann, die Copolymere zugemischt und die so erhaltene Mischung dispergiert. Die auf verschiedenen Wegen hergestellten Feststoffkonzentrate können dann in unterschiedliche Substrate wie z. B. Alkydharze, Polyesterharze, Acrylatharze, Polyurethanharze oder Epoxidharze eingearbeitet werden. Pigmente können aber auch lösemittelfrei direkt in den Copolymeren dispergiert werden und eignen sich dann besonders zur Pigmentierung von thermoplastischen und duroplastischen Kunststoffformulierungen.

Die Copolymere können vorteilhaft auch bei der Herstellung von Tinten für "non impact"-Druckverfahren wie "thermal inkjet" und dem "Bubblejet-Verfahren" verwendet werden. Diese Tinten können beispielsweise wässrige Tintenformulierungen, lösemittelbasierte Tintenformulierungen, lösemittelfreie oder - arme Tinten für UV-Applikationen als auch wachsartige Tinten sein.

Die Copolymere können vorteilhaft auch bei der Herstellung von Farbfiltern für Flüssigkristallanzeigen, -bildschirme, Farbauflösungsgeräte, Sensoren, Plasmabildschirme, Anzeigen auf Basis der SED (Surface conduction Electron emitter Display) und für MLCC (Multi Layer Ceramic Compounds) verwendet werden. Hierbei kann der flüssige Farbfilterlack, der auch Color Resist genannt wird, durch verschiedenste Applikationsverfahren wie Spin Coating, Aufrakeln, Kombination beider oder über "non impact"-Druckverfahren wie zum Beispiel Inkjet-Verfahren aufgetragen werden. Die MLCC-Technologie wird bei der Herstellung von Mikrochips und Leiterplatten verwendet.

Die Copolymere können auch zur Herstellung kosmetischer Zubereitungen wie zum Beispiel Make-up, Puder, Lippenstifte, Haarfärbemittel, Cremes, Nagellacke und Sonnenschutzpräparate verwendet werden. Diese können in den üblichen Formen, wie beispielsweise als W/O- oder O/W-Emulsionen, Lösungen, Gele, Cremes, Lotionen oder Sprays, vorliegen. Die Copolymere können vorteilhaft in zur Herstellung dieser Zubereitungen verwendeten Dispersionen eingesetzt werden. Diese können die für diese Zwecke in der Kosmetik üblichen Trägermedien, wie zum Beispiel Wasser, Ricinusöle oder Silikonöle und Feststoffe, wie zum Beispiel organische und anorganische Pigmente wie Titandioxid oder Eisenoxid, enthalten.

Ein derartiges Dispergiermittel kann schließlich auch zur Herstellung eines pigmentierten Überzuges auf einem Substrat verwendet werden, wobei der Pigmentlack auf das Substrat aufgebracht wird und wobei der auf das Substrat aufgebrachte Pigmentlack eingebrannt oder ausgehärtet bzw. vernetzt wird.

Die Copolymere können alleine oder zusammen mit nach dem Stand der Technik üblichen Bindemitteln eingesetzt werden. Beim Einsatz in Polyolefinen kann es z. B. vorteilhaft sein, entsprechende niedermolekulare Polyolefine als Trägermaterialien zusammen mit dem Kammcopolymer einzusetzen.

Eine mögliche Verwendung der Copolymere besteht auch in der Herstellung dispergierbarer pulverpartikel- und/oder faserpartikelförmiger Feststoffe, insbesondere von dispergierbaren Pigmenten oder Kunststofffüllstoffen, wobei die Partikel mit dem Kammcopolymer beschichtet sind. Derartige Beschichtungen von organischen wie auch anorganischen Feststoffen werden in bekannter Weise ausgeführt, wie sie z. B. in EP-A-0 270 126 beschrieben werden. Hierbei kann das Lösungs- oder Emulsionsmittel entweder entfernt werden oder im Gemisch unter Bildung von Pasten verbleiben. Diese Pasten sind übliche Handelsprodukte und können zusätzlich Bindemittelanteile sowie weitere Hilfs- und Zusatzstoffe enthalten. Speziell bei Pigmenten kann die Beschichtung der Pigmentoberfläche während oder nach der Synthese der Pigmente erfolgen, z. B. durch Zusatz der Copolymere zur Pigmentsuspension oder während oder nach dem Pigmentfinish. Die auf diese Weise vorbehandelten Pigmente zeichnen sich durch leichtere Einarbeitbarkeit sowie durch verbessertes Viskositäts-, Flockulations- und Glanzverhalten und durch höhere Farbstärke gegenüber nicht behandelten Pigmenten aus.

Beispiele für Pigmente sind Mono-, Di-, Tri- und Polyazopigmente, Oxazin-, Dioxazin-, Thiazin-Pigmente, Diketo-pyrrolo-pyrrole, Phthalocyanine, Ultramarin und andere Metallkomplex-Pigmente, indigoide Pigmente, Diphenylmethan-, Triarylmethan-, Xanthen-, Acridin-, Chinacridon-, Methin-Pigmente, Anthrachinon, Pyranthron-, Perylen- und andere polycyclische Carbonyl-Pigmente. Weitere Beispiele für organische Pigmente finden sich in der Monographie: W. Herbst, K. Hunger "Industrial Organic Pigments", 1997 (Verlag: Wiley-VCH, ISBN: 3-527-28836-8). Beispiele für anorganische Pigmente sind Pigmente auf Basis von Ruß, Graphit, Zink, Titandioxid, Zinkoxid, Zinksulfid, Zinkphosphat, Bariumsulfat, Lithophone, Eisenoxid, Ultramarin, Manganphosphat, Cobaltaluminat, Cobaltstannat, Cobaltzinkat, Antimonoxid, Antimonsulfid, Chromoxid, Zinkchromat, gemischten Metalloxiden auf Basis von Nickel, Bismut, Vanadium, Molybdän, Cadmium, Titan, Zink, Mangan, Cobalt, Eisen, Chrom, Antimon, Magnesium, Aluminium (beispielsweise Nickeltitangelb, Bismut-vanadat-molybdatgelb oder Chromtitangelb), Weitere Beispiele sind in der Monographie: G. Buxbaum "Industrial Inorganic Pigments", 1998 (Verlag: Wiley-VCH, ISBN: 3-527-28878-3) genannt. Anorganische Pigmente können auch magnetische Pigmente auf Basis von Reineisen, Eisenoxiden und Chromoxiden oder Mischoxyden, Metalleffektpigmente aus Aluminium, Zink, Kupfer oder Messing sowie Perlglanzpigmente, fluoreszierende und phosphoreszierende Leuchtpigmente sein. Weitere Beispiele sind nanoskalige organische oder anorganische Feststoffe mit Teilchengrößen unterhalb von 100 nm, wie bestimmte Rußtypen oder Partikel, die aus einem Metall-, oder Halbmetalloxid bzw. -hydroxid bestehen, sowie Partikel, die aus gemischten Metall- und/oder Halbmetalloxiden bzw. -hydroxiden bestehen. Beispielsweise lassen sich die Oxide und/oder Oxidhydroxide des Aluminiums, Siliziums, Zinks, Titans, usw. zur Herstellung solcher extrem feinteiligen Feststoffe heranziehen. Der Herstellprozess dieser oxidischen bzw. hydroxidischen bzw. oxidhydroxidischen Teilchen kann über die unterschiedlichsten Verfahren wie beispielsweise Ionenaustauschprozesse, Plasmaprozesse, Sol-Gel-Verfahren, Ausfällung, Zerkleinerung (z. B. durch Vermahlung) oder Flammhydrolyse usw. erfolgen. Bei diesen nanoskaligen Feststoffen kann es sich auch um sog. Hybrid-Partikel handeln, die aus einem anorganischen Kern und einer organischen Hülle - oder umgekehrt - bestehen. Beispiele für pulver- oder faserförmige Füllstoffe sind zum Beispiel solche, die aufgebaut sind aus pulver- oder faserförmigen Teilchen von Aluminiumoxid, Aluminiumhydroxid, Siliziumdioxid, Kieselgur, Kieselerde, Quarz, Kieselgel, Talkum, Kaolin, Glimmer, Perlite, Feldspat, Schiefermehl, Calciumsulfat, Bariumsulfat, Calciumcarbonat, Calcit, Dolomit, Glas oder Kohlenstoff. Weitere Beispiele für Pigmente oder Füllstoffe finden sich beispielsweise in der EP-A-0 270 126. Auch Flammschutzmittel wie z. B. Aluminium- oder Magnesiumhydroxid und Mattierungsmittel wie z. B. Kieselsäuren lassen sich ebenfalls hervorragend dispergieren und stabilisieren.

Die Copolymere können auch als Emulgator für Emulsionen eingesetzt werden. Da Emulsionen üblicherweise instabile Systeme sind, die sich nicht spontan bilden, sondern erst durch Schütteln, Rühren, Homogenisierung oder Sprühprozessen eine Verteilung der Phasen ineinander erhalten wird, werden Emulgatoren eingesetzt, um diese instabilen Strukturen zu stabilisieren. Der Einsatz von Emulgatoren vermeidet eine Separierung der Phasen.

Die Copolymere können auch als Rheologie-Additive eingesetzt werden.

Die Copolymere können auch als Haftvermittler eingesetzt werden.

Die Polymere können in den Beschichtungsmitteln, polymeren Formmassen, Thermoplasten, oder Kosmetika in relativ breiten Mengen von 0,01 bis 100 Gew.-%, bevorzugt 0,05 bis Gew.-50 %, ganz besonders bevorzugt 0,1 bis 40 Gew.-%, jeweils bezogen auf das gesamte Beschichtungsmittel, den gesamten Kunststoff oder das gesamte Kosmetikum, eingesetzt werden.

Insbesondere in Beschichtungsmitteln, Kunststoffen (polymeren Formmassen und Thermoplasten) und Kosmetika können die Polymere vorzugsweise auch in relativ geringen Mengen von 0,01 bis 5 Gew.-%, bevorzugt von 0,05 bis 2 Gew.-% und besonders bevorzugt von 0,1 bis 1 Gew.-%, jeweils bezogen auf das gesamte Beschichtungsmittel, den gesamten Kunststoff oder das gesamte Kosmetikum, eingesetzt werden.

Die Polymere können als Lösungen, Emulsionen oder als 100%-ige Stoffe eingesetzt werden, abhängig von der Art und Applikationsweise des Beschichtungsmittels, der polymeren Formmasse, des Thermoplasten, des Kosmetikums oder der sonstigen Zusammensetzung.

Weiterer Gegenstand der vorliegenden Erfindung sind Lacke, Pasten und Formmassen enthaltend die erfindungsgemäßen Copolymere und ein oder mehrere Pigmente, organische Lösemittel und/oder Wasser, sowie gegebenenfalls Bindemittel und lackübliche Hilfsstoffe. Des weiteren sind Pigmente beschichtet mit den erfindungsgemäßen Copolymeren Gegenstand der Erfindung.

Weiterer Gegenstand der Erfindung sind Beschichtungsmittel und Feststoffkonzentrate, wie beispielsweise Pigmentkonzentrate, die mindestens ein erfindungsgemäßes Polymer als Additiv - beispielsweise als Verlaufmittel, als Additiv zur Erzielung einer schmutzabweisenden Oberfläche, als Netz-/Dispergiermittel oder als Haftvermittler - enthalten.

Weiterer Gegenstand der Erfindung sind polymere Formmassen und Thermoplasten, die mindestens ein erfindungsgemäßes Polymer als Additiv - beispielsweise als Verlaufmittel, als Additiv zur Erzielung einer schmutzabweisenden Oberfläche, als Netz-/Dispergiermittel oder als Haftvermittler - enthalten.

Weiterer Gegenstand der Erfindung sind Oberflächen und Körper, welche mit einem Beschichtungsmittel beschichtet wurden, das mindestens ein erfindungsgemäßes Polymer als Additiv - beispielsweise als Verlaufmittel, als Additiv zur Erzielung einer schmutzabweisenden Oberfläche, als Netz-/Dispergiermittel oder als Haftvermittler - enthält.

### Beispiele

### Abkürzungen

- EEGE: Ethoxyethylglycidylether
- VBA: Vinylbenzylalkohol
- HEMA: Hydroxyethylmethacrylat
- HEMAm: Hydroxyethylmethacrylamid
- BA: n-Butylacrylat
- EHA: 2-Ethylhexylacrylat
- Silaplane FM0721: Polysiloxan-Monomethylacrylat (Mw - 5000) erhältlich von Chisso Corp.
- Bisomer MPEG550MA: Methoxypolyethylenglykol-Monomethacrylat (Mw ∼ 628) erhältlich von Cognis
- TEMPO: 2,2,6,6-Tetramethyl-1-piperidinyloxy-nitroxid
- AMBN: 2,2'-Azobis(2-methy)butyronitri!)
- AIBN: 2,2'-Azobis(isobutyronitril)
- DMSO: Dimethylsulfoxid
- DMF: Dimethylformamid
- DOWANOL PM: Monopropylenglykolmonomethylether (erhältlich von Dow Chemical Company)
- Amberlyst 15: Stark saurer Kationenaustauscher (erhältlich von Rohm and Haas)

### Messverfahren

### DMF-GPC:

Die Gelpermeationschromatographie (GPC) mit Dimethylformamid (DMF) als Elutionsmittel wurde bei 25°C mit einer HPLC-Pumpe (Bischoff HPLC Compact Pump), einem Brechungsindexdetektor (Jasco RI-2031 plus), einem Autosampler (Jaso AS-2055plus) und PSS GRAM-Säulen (100 Å, 1000 Å, 3000 Å) durchgeführt. Als Elutionsmittel wurde DMF + 1 g/L LiBr verwendet. Die Elutionsgeschwindigkeit betrug 1,0 mL/min. Die Kalibrierung erfolgte konventionell mit Polymethylmethacrylat- und Polystyrol-Standards. Das zahlenmittlere Molekulargewicht Mn, das gewichtsmittlere Molekulargewicht Mw und die Polydispersität Q = Mw/Mn wurden mit Hilfe des Programms PSS WinGPC Unity berechnet.

### THF-GPC:

Die Gelpermeationschromatographie (GPC) mit Tetrahydrofuran (THF) als Elutionsmittel wurde bei 25°C mit einer HPLC-Pumpe (ERC Model 6420), einem Brechungsindexdetektor (Jasco RI-2031 plus), einem Autosampler (Schambeck S 5200) und MZ SDplus Säulen (50 Å, 100 Å, 1000 Å, 10000 Å) durchgeführt. Als Elutionsmittel wurde THF mit einer Elutionsgeschwindigkeit von 1,0 mL/min verwendet. BHT (2,6-Di-tert-butyl-4-methylphenol) wurde als interner Standard verwendet. Die Kalibrierung erfolgte konventionell mit Polymethylmethacrylat- und Polystyrol-Standards. Das zahlenmittlere Molekulargewicht Mn, das gewichtsmittlere Molekulargewicht Mw und die Polydispersität Q = Mw/Mn wurden mit Hilfe des Programms PSS WinGPC Unity berechnet.

### THF+AcOH-GPC:

Die Gelpermeationschromatographie (GPC) wurde bei Raumtemperatur unter Verwendung einer HPLC-Pumpe (Waters Alliance 2690) unter einem refraktiven Indexdetektor (Waters 410), einem Autosampler (WATERS 717) und Styragel Säulen (100 Å, 500 Å, 10000 Å) durchgeführt. Das Laufmittel war Tetrahydrofuran + 1 % Essigsäure mit einer Fließgeschwindigkeit von 1 mL/min. Mit Hilfe von Polystyrolstandards wurde eine konventionelle Kalibrierung erzielt. Das Zahlenmittel des Molekulargewichts Mn, das Gewichtsmittel des Molekulargewichts Mw und die Polydispersität Q = Mw/Mn wurden gemäß dem Programm NTeqGPC berechnet.

### NMR-Spektroskopie:

NMR-Messungen wurden mit einem NMR-Gerät (Bruker DPX 300) bei 300 MHz (¹H) bzw. 75 MHz (¹³C) durchgeführt. Als Lösemittel wurden deuteriertes Chloroform (CDCl₃) und deuteriertes Dimethylsulfoxid (DMSO-*d*₆) verwendet.

Alle nachfolgend beschriebenen Reaktionen wurden unter Stickstoffatmosphäre durchgeführt.

### 1. Makromonomere

### 1.1 Synthese von linearen VBA-Glycidol-Makromonomeren

### 1.1.1 Synthese von VBA

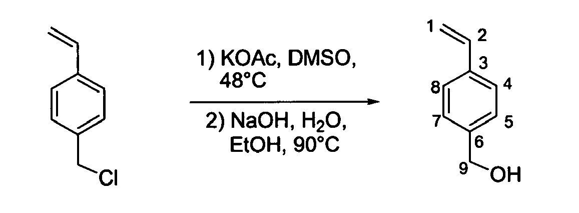

Kaliumacetat (11.06g, 113 mmol), Vinylbenzylchlorid (15.0g, 98 mmol) und Hydrochinon (1.5 mg) wurden in 35 mL DMSO vorgelegt und 48 Stunden bei 40°C gerührt. Es wurde dreimal mit Chloroform extrahiert und die organische Phase über Na₂SO₄ getrocknet. Na₂SO₄ wurde abfiltriert und Chloroform im Vakuum entfernt. Der Rückstand wurde zu einer Mischung von NaOH (7.0 g), Wasser (7 mL), Hydrochinon (1.5 mg) und 40 mL Ethanol gegeben und 90 Minuten zum Sieden erhitzt. Es wurde dreimal mit Chloroform extrahiert und die organische Phase über Na₂SO₄ getrocknet. Na₂SO₄ wurde abfiltriert und Chloroform im Vakuum entfernt. Die abschließende Aufreinigung erfolgte durch fraktionierende Destillation (Siedepunkt 80-90°C bei 1 mbar).
**¹H-NMR (300 MHz, CDCl₃):**
δ (ppm) = 2.98 (s, 1 H, OH), 4.53 (d, 1 H, CH₂-9), 5.18-5.24 (dd, 1 H, CH₂-1), 5.67-5.75 (dd, 1 H, CH₂-1), 6.62-6.72 (m, 1 H, CH-2), 7.14-7.34 (m, 4 H, CH-4, 5, 7, 8) ppm.

### 1.1.2 Synthese von linearen VBA-Glycidol-Makromonomeren

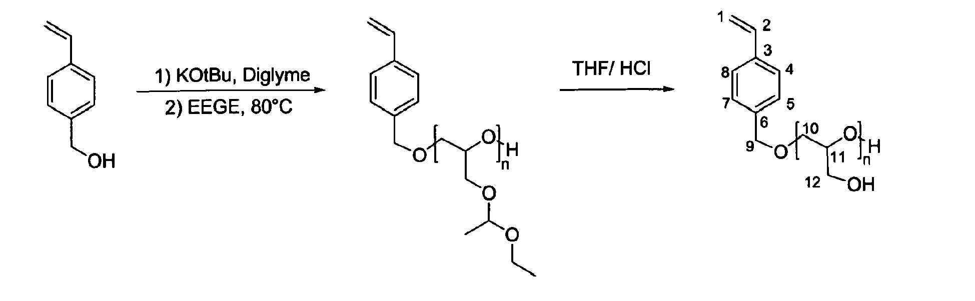

In einem ausgeheizten Schlenkkolben wurde VBA (11.2 g, 83.4 mmol) in 80 mL Diglyme gelöst und bei Raumtemperatur mit Kalium *tert*-butanolat (KOtBu) (1 M in THF, 16.68 mL, 0.2 eq.) versetzt. Nach 30 Minuten Rühren wurde entstandenes *tert-*Butanol im Vakuum entfernt und EEGE (73.15 g, 500.4 mmol) und Hydrochinon (15 mg) zugegeben. Nach einer Reaktionszeit von 16 Stunden bei einer Temperatur von 80°C wurde Diglyme im Vakuum entfernt. Das Makromonomer wurde als viskose Flüssigkeit erhalten.

**Ergebnisse nach GPC (THF) und NMR:**

| ***Mₙ*** | ***M_{w}*** | ***M_{w}*/*Mₙ*** | ***P_{n, NMR}*** |
|---|---|---|---|
| 1100 | 1200 | 1.09 | 6.3 |

### Entfernung der Acetalschutzgruppe

Das Makromonomer wurde in THF (ca. 30 mU 1 g Makromonomer) gelöst und mit konzentrierter Salzsäure (ca. 1 mL / 1g Polymer) versetzt und für 3 Stunden intensiv gerührt. Da das Produkt nicht als viskoses Öl ausfällt, wird mit Na₂CO₃ neutralisiert und dann THF einrotiert. Es wird in wenig Methanol aufgenommen und durch Fällen in Diethylether aufgereinigt. Es wurden 500 ppm des Inhibitors 2,6-Di-*tert*-butyl-4-methylphenol zugegeben und die Lösungsmittel im Vakuum entfernt.
**¹H-NMR (300 MHz, DMSO-d₆):**
δ (ppm) = 3.37-3.58 (m, CH₂-10, 12, CH-11), 4.49 (d, CH₂-9), 4.84 (s, OH), 5.23-5.29 (dd, CH₂-1), 5.79-5.86 (dd, CH₂-1), 6.68-6.79 (m, CH-2), 7.23-7.47 (m, CH-4, 5, 7, 8) ppm.

### 1.2 Synthese von linearen HEMAm-Glycidol-Makromonomeren

### 1.2.1 Synthese von HEMAm

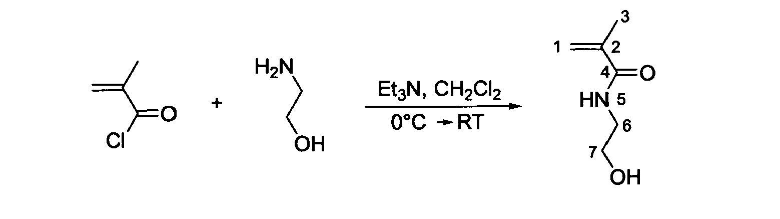

Aminoethanol (25.0 mL, 0.41 mol) und Triethylamin (10 mL, 0.13 mol) wurden in 35 mL Dichlormethan vorgelegt und auf 0°C abgekühlt. Methacrylsäurechlorid (20 mL, 0.205 mol) wurde in 35 mL Dichlormethan gelöst und langsam zur ersten Lösung zugetropft. Nach drei Stunden Rühren bei 0°C erwärmte man die Lösung über Nacht auf Raumtemperatur. Das ausgefallene Triethylaminhydrochlorid wurde abfiltriert und Dichlormethan im Vakuum entfernt. Die Aufreinigung erfolgte durch Säulenchromatographie über Kieselgel. Als Laufmittel diente eine Mischung von Methanol und Dichlormethan im Verhältnis 20 : 80.
**¹H-NMR (300 MHz, CDCl₃):**
δ (ppm) = 1.96 (s, 3 H, CH₃-3), 3.45 (tr, 2 H, CH₂-7), 3.73 (tr, 2 H, CH₂-6), 5.35 (s, 1 H, CH₂-1), 5.74 (s, 1 H, CH₂-1), 6.75 (s, 1 H, NH-5) ppm.

### 1.2.2 Synthese von linearen HEMAm-Glycidol-Makromonomeren

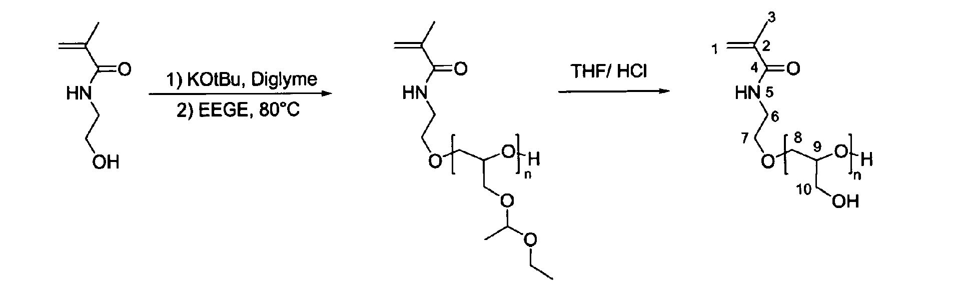

In einem ausgeheizten Schlenkkolben wurde HEMAm (6.93 g, 53.6 mmol) in 60 mL Diglyme gelöst und bei Raumtemperatur mit Kalium *tert*-butanolat (KOtBu) (1 M in THF, 10.7 mL, 0.2 eq.) versetzt. Nach 30 Minuten Rühren wurde entstandenes *tert-*Butanol im Vakuum entfernt und EEGE (47.01 g, 321.6 mmol) und Hydrochinon (10 mg) zugegeben. Nach einer Reaktionszeit von 18 Stunden bei einer Temperatur von 80°C wurde Diglyme im Vakuum entfernt. Das Makromonomer wurde als viskose Flüssigkeit erhalten.

**Ergebnisse nach GPC (THF) und NMR:**

| *Mₙ* | *M_{w}* | *M_{w}*/*Mₙ* | *P_{n, NMR}* |
|---|---|---|---|
| 960 | 1120 | 1.17 | 5.7 |

### Entfernung der Acetalschutzgruppe

Das Makromonomer wurde in THF (ca. 30 mU 1 g Makromonomer) gelöst und mit konzentrierter Salzsäure (ca. 1 mL / 1g Polymer) versetzt und für 3 h intensiv gerührt, wobei das Produkt als viskoses Öl anfällt. THF wurde abdekantiert und der Rückstand mehrmals mit THF gewaschen. Das Produkt wurde in wenig Methanol gelöst und in einen entsprechenden Kolben überführt. Es wurden 500 ppm des Inhibitors 2,6-Di-*tert*-butyl-4-methylphenol zugegeben und die Lösungsmittel im Vakuum entfernt.
**¹H-NMR (300 MHz, DMSO-d₆):**
δ (ppm) = 1.86 (s, CH₃-3), 3.34-3.62 (m, CH₂-6, 7, 8, 10, CH-9), 4.72 (s, OH), 4.96 (s, CH₂-1), 5.13 (s, CH₂-1) ppm.

### 1.3 Synthese von verzweigten VBA-Glycidol-Makromonomeren

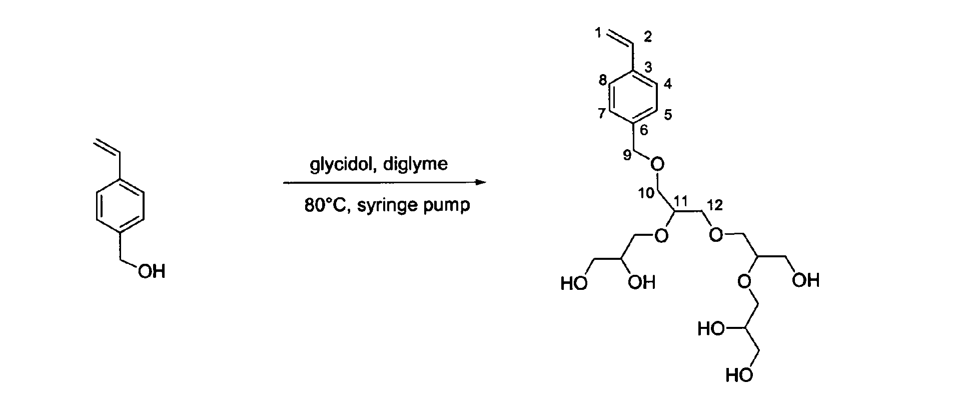

In einem ausgeheizten Schlenkkolben wurde Vinylbenzylalkohol (10.34 g, 77.1 mmol) in 50 mL Diglyme gelöst, mit Hydroquinon (10 mg) versetzt und bei Raumtemperatur mit Kalium *tert*-butanolat (KOtBu) (1 M in THF, 7.7 mL, 0.1 eq.) versetzt. Nach 30 Minuten Rühren wurde entstandenes *tert-*Butanol im Vakuum entfernt. Bei einer Temperatur von 80°C wurde die Reaktion gestartet. Glycidol (22.85 g, 308.4 mmol) wurde langsam mit Hilfe einer Spritzenpumpe mit einer Geschwindigkeit von 4 mUh zugegeben. Nach einer Reaktionszeit von 16 Stunden wurde Diglyme im Vakuum entfernt. Der Rückstand wurde in Methanol aufgenommen und es wurde Amberlyst 15 zugegeben. Nach 4 h Rühren wurde der lonentauscher abfiltriert und Methanol im Vakuum entfernt. Das Makromonomer wurde als viskose Flüssigkeit erhalten.
**¹H-NMR (300 MHz, DMSO-d₆):**
δ (ppm) = 3.34-3.78 (m, CH₂-10, 12, CH-11), 3.81-4.30 (br s, OH) 4.49 (d, CH₂-9), 5.20-5.27 (dd, CH₂-1), 5.77-5.85 (dd, CH₂-1), 6.67-6.77 (m, CH-2), 7.28-7.47 (m, CH-4, 5, 7, 8) ppm.

**Ergebnisse nach GPC (DMF):**

| *Mₙ* | *M_{w}* | *M_{w}lMₙ* |
|---|---|---|
| 950 | 1900 | 2.00 |

### 1.4 Synthese von verzweigten HEMAm-Glycidol-Makromonomeren

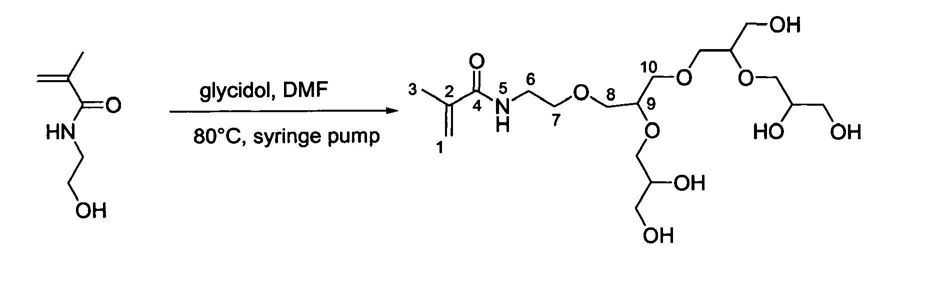

In einem ausgeheizten Schlenkkolben wurde HEMAm (0.553 g, 4.25 mmol) in 5 mL DMF gelöst, mit Hydroquinon (2 mg) versetzt und bei Raumtemperatur mit Kalium *tert*-butanolat (1 M in THF, 0.85 mL, 0.2 eq.) versetzt. Nach 30 Minuten Rühren wurde entstandenes *tert*-Butanol im Vakuum entfernt. Bei einer Temperatur von 80°C wurde die Reaktion gestartet. Glycidol (1.259 g, 17 mmol) wurde langsam mit Hilfe einer Spritzenpumpe mit einer Geschwindigkeit von 0.4 mUh zugegeben. Nach einer Reaktionszeit von 16 Stunden wurde Diglyme im Vakuum entfernt. Der Rückstand wurde in Methanol aufgenommen und es wurde Amberlyst 15 zugegeben. Nach 4 h Rühren wurde der lonentauscher abfiltriert und Methanol im Vakuum entfernt. Das Makromonomer wurde als viskose Flüssigkeit erhalten.
**¹H-NMR (300 MHz, DMSO-d₆):**
δ (ppm) = 1.85 (s, 3 H, CH₃-3) 3.33-3.79 (m, CH₂-6, 7, 8, 10, CH-9), 3.81-4.30 (br s, OH), 5.33 (s, 1 H, CH-1), 5.65 (s, 1 H, CH-1), 7.96 (s, 1 H, NH-5) ppm.

**Ergebnisse nach GPC (DMF):**

| *Mₙ* | *M_{w}* | *M_{w}*/*Mₙ* |
|---|---|---|
| 700 | 950 | 1.34 |

### 2. Polymere

### 2.1 Synthese von Copolymeren aus linearen HEMAm-Glycidol-Makromonomeren und BA

In einem ausgeheizten Schlenkkolben wurden unter Stickstoffatmosphäre 0,288 g HEMAm-Glycidol Makromonomer aus Beispiel 1.2.2 und 0,266 g BA in 10 mL DMF gelöst. 21 mg AIBN wurde zugegeben und die Lösung durch drei Einfrier-Auftau-Zyklen entgast. Nach einer Reaktionszeit von 18 Stunden bei einer Temperatur von 80°C wurde DMF im Vakuum entfernt.

**Ergebnisse nach GPC (DMF):**

| *Mₙ* | *M_{w}* | *M_{w}*/*Mₙ* |
|---|---|---|
| 1000 | 2000 | 1.93 |

### 2.2 Synthese von Copolymeren aus linearen HEMAm-Glycidol-Makromonomeren und EHA

In einem ausgeheizten Schlenkkolben wurden unter Stickstoffatmosphäre 0,288 g HEMAm-Glycidol Makromonomer aus Beispiel 1.2.2 und 0,383 g EHA in 5 mL DMF gelöst. 13 mg AIBN wurde zugegeben und die Lösung durch drei Einfrier-Auftau-Zyklen entgast. Nach einer Reaktionszeit von 18 Stunden bei einer Temperatur von 100°C wurde DMF im Vakuum entfernt.

**Ergebnisse nach GPC (DMF):**

| *Mₙ* | *M_{w}* | *M_{w}*/*Mₙ* |
|---|---|---|
| 1700 | 3700 | 2.29 |

### 2.3 Synthese von Copolymeren aus verzweigten VBA-Glycidol-Makromonomeren und Styrol

In einem ausgeheizten Schlenkkolben wurden unter Stickstoffatmosphäre 1,2 g VBA-Glycidol-Makromonomer aus Beispiel 1.3 und 1,2 g Styrol in 5 mL DMF vorgelegt. Nach Zugabe von 37,5 mg TEMPO und 39,4 mg AIBN wurde die Reaktionsmischung durch drei Einfrier-Auftau-Zyklen entgast. Die Reaktionslösung wurde 72 Stunden bei 130°C gerührt. Nach entfernen von DMF im Vakuum wurde das Produkt als bräunliche hochviskose Substanz isoliert.
**¹H-NMR (300 MHz, DMF-d₇):**
δ (ppm) = 0.81 -2.42 (m, 6 H. CH-2, 8, CH₂-1, 7) 3.30-4.15 (m, 20 H, CH₂-14, 16, CH-15), 4.38-5.10 (m, 2 H, CH₂-13, OH), 6.32-7.51 (m, 9 H, CH-4, 5, 6, 10, 11) ppm.

**Ergebnisse nach GPC (DMF):**

| *Mₙ* | *M_{w}* | *M_{w}*/*Mₙ* |
|---|---|---|
| 4400 | 5700 | 1.27 |

### 2.4 Synthese von Copolymeren aus verzweigten VBA-Glycidol-Makromonomeren, EHA und Silaplane FM-0721

In einem mit Rührer, Thermometer, Destillationsaufsatz, Tropftrichter und Stickstoffeinleitungsrohr versehenen Glaskolben werden 16.62 g VBA-Glycidol-Makromonomer aus Beispiel 1.3 und 115 g Dowanol PM vorgelegt. Während der gesamten Reaktion wird Stickstoff übergeleitet. Nach Erhöhung der Reaktionstemperatur auf 110°C wird innerhalb eines Zeitraumes von 210 Minuten eine Mischung aus 1.48 g AMBN, 1.83 g α-Methylstyroldimer, 37.95 g EHA und 65.43 g Silaplane FM-0721 gleichmäßig zudosiert. Nach Abschluss der Zugabe hält man die Reaktionstemperatur noch 180 Minuten bei 110°C.
Danach wird 0,2 g AMBN hinzugeben. Nach Abschluss der Zugabe hält man die Reaktionstemperatur noch 180 Minuten bei 110°C. Zunächst wird das verwendete Lösemittel am Rotationsverdampfer unter Vakuum abdestilliert.

**Ergebnisse nach GPC (THF + AcOH):**

| *Mₙ* | *M_{w}* | *M_{w}*/*Mₙ* |
|---|---|---|
| 3259 | 10865 | 3.33 |

### 2.5 Synthese von Copolymeren aus verzweigten VBA-Glycidol-Makromonomeren, BA und Silaplane FM-0721

In einem mit Rührer, Thermometer, Destillationsaufsatz, Tropftrichter und Stickstoffeinleitungsrohr versehenen Glaskolben werden 18.40 g VBA-Glycidol-Makromonomer aus Beispiel 1.3 und 115 g Dowanol PM vorgelegt. Während der gesamten Reaktion wird Stickstoff übergeleitet. Nach Erhöhung der Reaktionstemperatur auf 110°C wird innerhalb eines Zeitraumes von 210 Minuten eine Mischung aus 1.64 g AMBN, 2.02 g α-Methylstyroldimer, 29.18 g BA und 72.43 g Silaplane FM-0721 gleichmäßig zudosiert. Nach Abschluss der Zugabe hält man die Reaktionstemperatur noch 180 Minuten bei 110°C.
Danach wird 0,27 g AMBN hinzugeben. Nach Abschluss der Zugabe hält man die Reaktionstemperatur noch 180 Minuten bei 110°C. Zunächst wird das verwendete Lösemittel am Rotationsverdampfer unter Vakuum abdestilliert.

**Ergebnisse nach GPC (THF + AcOH):**

| *Mₙ* | *M_{w}* | *M_{w}*/*Mₙ* |
|---|---|---|
| 3114 | 11930 | 3.83 |

### 2.6 Synthese von Copolymeren aus verzweigten HEMAm-Glycidol-Makromonomeren, EHA, Bisomer MPEG550MA und Silaplane FM-0721

In einem mit Rührer, Thermometer, Destillationsaufsatz, Tropftrichter und Stickstoffeinleitungsrohr versehenen Glaskolben wird 76 g Dowanol PM vorgelegt. Während der gesamten Reaktion wird Stickstoff übergeleitet. Nach Erhöhung der Reaktionstemperatur auf 110°C wird innerhalb eines Zeitraumes von 180 Minuten eine Mischung aus 1.79 g AMBN, 2.21 g α-Methylstyroldimer, 38.98 g EHA, 31.63 g Silaplane FM-0721 und eine Mischung aus 20.09 g HEMAm-Glycidol-Makromonomer aus Beispiel 1.4, 29.30 g Bisomer MPEG550MA gleichzeitig und gleichmäßig zudosiert. Nach Abschluss der Zugabe hält man die Reaktionstemperatur noch 120 Minuten bei 110°C.
Danach wird 0,3 g AMBN hinzugeben. Nach Abschluss der Zugabe hält man die Reaktionstemperatur noch 120 Minuten bei 110°C. Zunächst wird das verwendete Lösemittel am Rotationsverdampfer unter Vakuum abdestilliert.

**Ergebnisse nach GPC (THF + AcOH):**

| *Mₙ* | *M_{w}* | *M_{w}*/*Mₙ* |
|---|---|---|
| 4705 | 13208 | 2.80 |

### 3. Vergleichsbeispiel

### Synthese von verzweigten HEMA-Glycidol-Makromonomeren (Reaktion gemäß W. F. Hoskyns (Research Disclosure 174, 32-33 (1978))

In einem ausgeheizten Schlenkkolben wurde Glycidol (8.88 g, 120 mmol) vorgelegt und auf 150°C erhitzt. Eine Mischung von KOH (20 mg), Hydroquinon (130 mg) und HEMA (2.6 g, 20 mmol) wurde innerhalb von 2 Stunden mit Hilfe einer Spritzenpumpe zum Glycidol zugegeben. Die Reaktionsmischung wurde weitere 2 Stunden bei 150°C gerührt. Das Produkt wird als viskose bräunliche Substanz erhalten. Allerdings entstehen bereits während der Reaktion Polymerpartikel, die nicht in der Hauptfraktion löslich sind. Diese können auch nach der Reaktion nicht wieder in Lösung gebracht werden.

### 4. ANWENDUNGSBEISPIELE

### Schmutzabweisende Oberflächen und Verlauf

Prüfsystem: Acrylat-Melamin-Einbrennlack, klar
Zusammensetzung (Angabe in Gewichtsteilen):

| | |
|---|---|
| Setalux 1760 VB 64 | 44,0 |
| Setalux C 91389 VX 45 | 16,5 |
| Luwipal 018 | 25,3 |
| Butyldiglykolacetat | 2,1 |
| Solvesso 150 | 4,8 |
| Butanol | 6,1 |
| Butyldiglykol | 1,2 |

mischen, dann Zugabe von

| | |
|---|---|
| Butanol | 8,0 |
| Solvesso 150 | 3,8 |
| Butyldiglykol | 1,8 |

| | |
|---|---|
| Setalux 1760 VB 64 | = Acrylat-Einbrennharz Nuplex Resins, Bergen op Zoom |
| Setalux C 91389 VX 45 | = Acrylat-Einbrennharz Nuplex Resins, Bergen op Zoom |
| Luwipal 018 | = Melamin-Einbrennharz, BASF AG, Ludwigshafen |

Die Polymeren (Polymer aus Beispiel 2.4, Polymer aus Beispiel 2.5, Polymer aus Beispiel 2.6 oder kein Additiv, gemäß untenstehender Tabelle) wurden einen Tag vor der Applikation eingearbeitet. Die Dosierung betrug 0,15 Gew.-%, bezogen auf das Gesamtgemisch.

Am Tag der Applikation wurde mit Solvesso 150 die Viskosität auf 24 Sekunden, DIN 4mm-Auslaufbecher (23°C) eingestellt. Die Applikation erfolgte mittels Spritzautomaten. Die Aushärtung erfolgte nach 30 Minuten Ablüftzeit bei 140°C in 30 Minuten. Die Schichtdicke betrug 20 µm.

Die resultierenden Lackierungen werden wie folgt geprüft.

### Erzielung schmutzabweisender Oberflächen

Die erhaltenen Lackfilme werden hinsichtlich ihrer schmutz-, wasser- und ölabweisenden Wirkung nach folgenden Kriterien beurteilt:
Visuelle Beurteilung der Lackoberfläche: Die Lackoberfläche wird auf Trübung im Film und Oberflächenstörungen, wie Krater, Stippen und Unverträglichkeiten, untersucht.
Bewertung: 1 - 5
1 = Lackoberfläche ohne Oberflächenstörungen
5 =Lackoberfläche mit Kratern/Stippen

Edding-Test:
Es wird mit einem Permanent-Marker des Typs "Edding 400" die Lackoberfläche beschriftet und visuell beurteilt, ob die Oberfläche beschreibbar ist. Es wird beurteilt, ob die Tinte auf der Oberfläche spreitet oder sich zusammenzieht. Nach dem Trocknen der Tinte wird versucht, diese mit einem trockenen Tuch abzuwischen.
Bewertung: 1 - 5
1 = Tinte zieht sich zusammen, lässt sich restlos mit einem Papiertuch entfernen
5 = Tinte spreitet sehr gut auf Untergrund, lässt sich praktisch nicht entfernen

Bitumen-Test:
Bitumen wird erhitzt, bis er so weit verflüssigt ist, dass er sich auf die Lackoberfläche aufbringen lässt. Nach Abkühlen der Masse wird visuell beurteilt, wie gut sich die Bitumenmasse von der Oberfläche wieder rückstandsfrei manuell ablösen lässt.
Bewertung: 1 - 5:
1 = Bitumen lässt sich leicht und restlos entfernen
5 = Bitumen haftet fest auf der Oberfläche und lässt sich praktisch nicht entfernen
Wasser-Ablauftest:
Es wird ein Tropfen Wasser auf die Oberfläche gegeben. Anschließend wird die beschichtete Lackoberfläche gekippt, bis der Tropfen abläuft. Es wird visuell beurteilt, bei welchem Winkel der Tropfen abläuft und ob der Tropfen rückstandsfrei abläuft.
Bewertung: 1 - 5:

| | |
|---|---|
| 1 = | geringer Winkel genügt und der Tropfen läuft komplett ohne Nasenbildung und Rückstandströpfchen ab |
| 5 = | Lackblech muss stark geneigt werden bis der Tropfen abläuft, eventuell bleiben Wasserreste auf der Lackoberfläche zurück |

Mineralöl-Ablauftest:
Es wird ein Tropfen handelsübliches Mineralöl auf die Lackoberfläche gegeben. Anschließend wird die beschichtete Lackoberfläche gekippt, bis der Tropfen etwa 10 cm gelaufen ist. Nach Ablauf von 5 Minuten wird die Ölspur bzw. eine erneute Tropfenbildung visuell bewertet.
Bewertung: 1 - 5:
1 = Die Ölspur bildet sich sofort in einzelne Tropfen zurück
5 = Die Ölspur bildet sich nicht zurück, sondern spreitet eventuell weiter

Die erhaltenen Ergebnisse sind in der folgenden Tabelle dargestellt.

| | Oberfläche visuell | Edding | Bitumen | Wasser-Ablauf | Mineralöl-Ablauf |
|---|---|---|---|---|---|
| Kontrolle (ohne Additiv) | 4 | 5 | 5 | 5 | 5 |
| Polymer aus Beispiel 2.4 | 2 | 1 | 1 | 1 | 1 |
| Polymer aus Beispiel 2.5 | 2 | 1 | 1 | 1 | 1 |
| Polymer aus Beispiel 2.6 | 1 | 1 | 1 | 1 | 1 |

Die Ergebnisse zeigen, dass bei der Verwendung der erfindungsgemäßen Polymere als Additive eine sehr gut schmutz-, öl- und wasserabweisende Oberfläche erzielt wird.

### Verwendung der Polymere als Verlaufmittel

Der Verlauf wurde mit dem wave-scan DOI der Firma Byk-Gardner ermittelt, indem die Lange Welle, die Kurze Welle und der Wert für DOI (distinctness of image) gemessen wurden. Glanz und Haze wurden mit dem Haze-Gloss der Firma Byk-Gardner
ermittelt.

| | Lange Welle | Kurze Welle | DOI | Glanz R20 | Haze |
|---|---|---|---|---|---|
| Kontrolle (ohne Additiv) | 58 | 64 | 73 | 89 | 76 |
| Polymer aus Beispiel 2.4 | 5 | 35 | 87 | 95 | 16 |
| Polymer aus Beispiel 2.5 | 9 | 38 | 86 | 96 | 15 |
| Polymer aus Beispiel 2.6 | 5 | 30 | 89 | 96 | 13 |

Die Ergebnisse zeigen dass, bei Verwendung der erfindungsgemäßen Polymere als Verlaufmittel bessere Ergebnisse hinsichtlich Verlauf, Glanz und Haze erzielt werden als ohne Verlaufmittel.

## Patentansprüche

1. Verfahren zur Herstellung eines Makromonomers, **dadurch gekennzeichnet, dass**
(A) eine Startverbindung U - OH, in der
U - O - = eine ethylenisch ungesättigte Kopfgruppe, ausgewählt aus der Gruppe bestehend aus
a) Resten der allgemeinen Formel (I)
H₂C = CR¹ - C₆H₄₋ₛ(R⁴)ₛ - R³ - O - , (I)
und
b) Resten der allgemeinen Formel (II)
H₂C=CR²-CO-NH-R³-O- (11)
mit R¹ und R² = H oder linearer oder verzweigter Alkylrest mit 1 bis 4 C-Atomen, mit R³ = linearer oder verzweigter Alkylen-, Aralkylen-Rest mit 1 bis 20 C-Atomen, der ein oder mehrere Hydroxygruppen enthalten kann,
und mit R⁴ = unabhängig voneinander linearer oder verzweigter Alkyl-, Aralkyl-, Alkoxy- oder Aralkoxy-Rest mit 1 bis 20 C-Atomen und s = 0 - 4, ist, durch Zusatz eines Alkalihydroxids oder eines Alkoxids unter Bildung von Wasser oder Alkohol partiell deprotoniert wird, so dass ein Gemisch aus protonierten (U-OH) und deprotonierten (U-O⁽⁻⁾) Molekülen der Startverbindung entsteht, dann
(B) das entstandene Wasser oder der entstandene Alkohol im Wesentlichen aus dem Reaktionsgemisch entfernt wird, und anschließend
(C) das Gemisch aus protonierten (U-OH) und deprotonierten (U-O⁽⁻⁾) Molekülen der Startverbindung mit mindestens einer Oxiranverbindung der Formel (III) 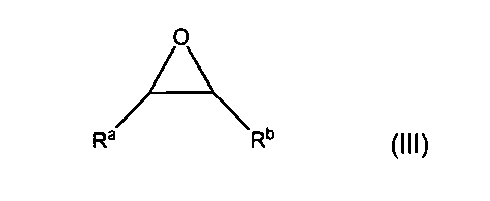 wobei R^{a} = Wasserstoff, Methyl, Ethyl, n-Propyl, iso-Propyl, n-Butyl, iso-Butyl, sec-Butyl oder tert-Butyl,
und R^{b} = linearer oder verzweigter Alkylrest mit 1 bis 6 Kohlenstoffatomen und mindestens einer Hydroxygruppe, die optional mit einer Schutzgruppe verethert sein kann, ist,
sowie gegebenenfalls mit mindestens einem Alkylenoxid,
in Gegenwart eines Inhibitors der radikalischen Polymerisation unter Öffnung des Oxiranrings umgesetzt wird, wobei das molare Verhältnis der eingesetzten Stoffmengen n_{(Startverbindung)} : n_{(Oxiranverbindung)} zwischen 1 : 100 und 1 : 1 liegt.

2. Verfahren nach Anspruch 1, **dadurch gekennzeichnet, dass** die ethylenisch ungesättigte Kopfgruppe U - O - ein Rest der allgemeinen Formel (II)
H₂C=CR²-CO-NH-R³-O- (11)
mit R² = H oder CH₃ und mit R³ = Ethyl oder Propyl ist.

3. Verfahren nach Anspruch 2, **dadurch gekennzeichnet, dass** R² = CH₃ und R³ = Ethyl ist.

4. Verfahren nach einem der vorhergehenden Ansprüche, **dadurch gekennzeichnet, dass** mindestens ein Alkylenoxid aus der Gruppe, bestehend aus Ethylenoxid, Propylenoxid, Butylenoxid, Pentylenoxid und Hexylenoxid, eingesetzt wird und das Verhältnis der eingesetzten Stoffmengen, [n_{(Oxiranverbindung)} + n_{(Alkylenoxid)}] : n_{(Startverbindung)}, zwischen 100 : 1 und 2 : 1 liegt.

5. Makromonomer, herstellbar gemäß dem Verfahren nach einem der Ansprüche 1 bis 4.

6. Polymer, erhältlich durch radikalische Polymerisation eines oder mehrerer Makromonomere gemäß Anspruch 5, und gegebenenfalls eines oder mehrerer weiterer, radikalisch polymerisierbarer Comonomere.

7. Polymer nach Anspruch 6, **dadurch gekennzeichnet, dass** neben dem oder den Makromonomeren gemäß Anspruch 5 mindestens ein weiteres, radikalisch polymerisierbares Comonomer eingesetzt wird.

8. Polymer nach Anspruch 7, **dadurch gekennzeichnet, dass** das mindestens eine weitere, radikalisch polymerisierbare Comonomer aus der Gruppe, bestehend aus n-Butylacrylat, i-Butylacrylat, t-Butylacrylat, Methylacrylat, Ethylacrylat, Propylacrylat, Hexylacrylat, 2-Ethylhexylacrylat, Cyclohexylacrylat, Laurylacrylat, Tetradecylacrylat, Isobornylacrylat, n-Butylmethacrylat, i-Butylmethacrylat, t-Butylmethacrylat, Methylmethacrylat, Ethylmethacrylat, Propylmethacrylat, Hexylmethacrylat, 2-Ethylhexylmethacrylat, Cyclohexylmethacrylat, Laurylmethacrylat, Tetradecylmethacrylat, Isobornylmethacrylat, Hydroxyethylacrylat, Hydroxybutylacrylat, Hydroxyethylmethacrylat, Hydroxybutylmethacrylat, 2-Methoxyethylacrylat, 2-Methoxyethylmethacrylat, Styrol, Ethylvinylether, Butylvinylether, Hydroxybutylvinylether, Methacrylsäure, Acrylsäure, Maleinsäureanhydrid, Polyethylenglykolmonomethacrylat, Polypropylenglykolmonomethacrylat, Poly(ethylenglykol-propylenglykol)monomethacrylat, α-Butyldimethylsiloxy-w-(3-methacryloxypropyl)-polydimethylsiloxan, α-Butyldimethyl-siloxy-w-(3-methacryloxypolyethylenoxidpropyl)-polydimethylsiloxan, N,N'-Dimethylaminoethylmethacrylat, N,N'-Dimethylaminoethylacrylat, 2-Vinylpyridin, 4-Vinylpyridin und Vinylimidazol, ausgewählt ist.

9. Polymer nach einem oder mehreren der Ansprüche 6 bis 8, **dadurch gekennzeichnet, dass** der Anteil des oder der Makromonomere gemäß Anspruch 5 zwischen 1 und 60 Mol%, bevorzugt 2 - 30 Mol%, besonders bevorzugt 2 - 15 Mol%, jeweils bezogen auf die gesamte Stoffmenge aller eingesetzten Makromonomere und Comonomere, beträgt.

10. Verfahren zur Herstellung eines Polymers nach Anspruch 6, **dadurch gekennzeichnet, dass** mindestens ein Makromonomer gemäß Anspruch 5 und gegebenenfalls ein oder mehrere weitere, radikalisch polymerisierbare Comonomere radikalisch polymerisiert werden.

11. Verwendung eines Polymers nach einem oder mehreren der Ansprüche 6 bis 8 als Additiv in Beschichtungsmitteln, Kunststoffen oder Kosmetika.

12. Verwendung nach Anspruch 11, **dadurch gekennzeichnet, dass** das Polymer dem Beschichtungsmittel, dem Kunststoff oder dem Kosmetikum in einer Menge von 0,01 - 5 Gew.-%, bevorzugt 0,05 - 2 Gew.-% und besonders bevorzugt 0,1 - 1 Gew.-%, jeweils bezogen auf das gesamte Beschichtungsmittel, den gesamten Kunststoff bzw. das gesamte Kosmetikum, zugesetzt wird.

13. Beschichtungsmittel, enthaltend mindestens ein Polymer nach Anspruch 6.

14. Kosmetikum, enthaltend mindestens ein Polymer nach Anspruch 6.

15. Kunststoff, enthaltend mindestens ein Polymer nach Anspruch 6.
